(19) Europäisches Patentamt

European Patent Office

Office européen des brevets

(11) **EP 1 684 496 A1**

(12) **EUROPEAN PATENT APPLICATION**
published in accordance with Art. 158(3) EPC

(43) Date of publication:
26.07.2006 Bulletin 2006/30

(51) Int Cl.:
*H04N 1/387* (2006.01)

(21) Application number: 04799484.3

(22) Date of filing: 04.11.2004

(86) International application number:
PCT/JP2004/016300

(87) International publication number:
WO 2005/046212 (19.05.2005 Gazette 2005/20)

(84) Designated Contracting States:
DE ES FR GB IT

(30) Priority: 11.11.2003 JP 2003381142

(71) Applicant: Oki Electric Industry Company, Limited
Tokyo 105-8460 (JP)

(72) Inventor: MAENO, Kurato,
c/o Oki Electric Industry Co., Ltd.
Tokyo 1058460 (JP)

(74) Representative: Betten & Resch
Patentanwälte,
Theatinerstrasse 8
80333 München (DE)

(54) **WATERMARK INFORMATION EMBEDDING DEVICE, WATERMARK INFORMATION DETECTION DEVICE, WATERMARK INFORMATION EMBEDDING METHOD, WATERMARK INFORMATION DETECTION METHOD, AND PRINTED MATTER**

(57)     This invention provides a watermark information embedding apparatus capable of improving information recording density dramatically by expressing the information with a simple line or dot.

More specifically, this is a watermark information embedding apparatus for embedding information into an image by electronic watermark technology: a coding portion 11 for coding embedding information to be embedded into an image; a pattern allocating portion 12 for allocating a pattern to each symbol of the coded embedding information; and a watermark embedded image synthesizing portion 13 for disposing the pattern corresponding to the embedding information on the image regularly and one or more patterns having a predetermined spatial frequency are allocated to each symbol. As a consequence, the information recording density can be improved dramatically by expressing information with a simple line or dot.

FIG.1

**Description**

**BACKGROUND OF THE INVENTION**

**Field of the Invention**

The present invention relates to watermark information embedding apparatus/method for embedding information into image using electronic watermark technology, and watermark information detecting apparatus/method for detecting embedded information which is embedded in image according to electronic watermark technology.

Description of the Related Art

The "electronic watermark" which embeds information for preventing a copy/forgery or classified information in image or document data in an invisible form is premised on that storage and transfer of data are carried out all on an electronic medium and enables information to be detected securely because information embedded by watermark is never deteriorated or lost. Likewise, a method for embedding classified information in a printed document in a visually not obstructive form other than characters so that it is impossible to falsify the document is necessary in order to prevent a document printed on a paper medium from being falsified or copied improperly.

As an innovative method for embedding the aforementioned classified information in a printed document, a technology disclosed in Japanese Patent Application Laid-Open No. 2003-101762 is available. In the technology disclosed in the document, A Gabor filter is used to embed and extract information. Those inventions using the Gabor filter have an advantage that information can be recorded with pale pattern density so that it is not easy to see it visually because waves are expressed with plural dots in a wide range.

[Patent document 1] Japanese Patent Application Laid-Open No. 2003-101762

The electronic watermark disclosed in the Japanese Patent Application Laid-Open No. 2003-101762 uses a pattern which enables a signal to be detected easily with the Gabor filter. Thus, there is a problem that information is easy to lose because its density is too low and a restriction in the quantity of information because the size of each pattern is large. That is, due to blur in print which occurs because of low density of foundation paper or when print is made with a printer having a small dot diameter like LED printer, sometimes the electronic watermark information cannot be read out. Further, an area necessary for embedding 1-bit information is large because the wave is expressed with the dot pattern, so that information density is limited. Further, because the quantity of information which can be embedded is small, it is difficult to use a strong error correction code or signal synchronous method and consequently, sometimes, this method acts poor when there exist wrinkle or stain on a medium.

**SUMMARY OF THE INVENTION**

The present invention has been achieved in views of the above-described problems which the conventional watermark information embedding/ detecting technology has and a prominent object of the present invention is to provide a novel, improved watermark information embedding apparatus, watermark information detecting apparatus, watermark information embedding method, watermark information detecting method and printed material capable of improving information recording density tremendously by expressing the information with simple lines or dots.

To solve the above-described problem, according to a first aspect of the present invention, there is provided a watermark information embedding apparatus for embedding information into an image by electronic watermark technology. The watermark information embedding apparatus of the invention comprises: a coding portion for coding embedding information to be embedded into an image; a pattern allocating portion for allocating a pattern to each symbol of the coded embedding information; and a disposing portion for disposing the pattern corresponding to the embedding information on the image regularly, wherein one or more patterns having a predetermined spatial frequency are allocated to each symbol. The pattern can be a pattern constituted of plural pixels having a specific frequency and direction.

The watermark information embedding apparatus of the present invention can be applied as follows.

A correspondence between the pattern and symbol can be specified, for example, as follows.

The pattern can specify a corresponding symbol by a direction in which the frequency component is strong. The pattern has an edge component having frequencies perpendicular to each other and can specify a corresponding symbol by a direction of an edge component in which the frequency is strong. The pattern has horizontal and vertical edge components having a specific frequency and can specify a corresponding symbol by the direction of an edge component in which the frequency is strong. Further, two or more patterns having a near frequency and direction may be allocated to each symbol.

The disposing portion may compare a pixel on an image with a pixel of a pattern in the terms of pixel unit when the pattern is disposed and change over whether or not the pattern is disposed in the terms of pixel unit. In this case, the comparison can be carried out with the value of the pixel. The comparison can be carried out by determining whether the pixel on the image is a pixel constituting the foreground or a pixel constituting the background and whether a pixel of the pattern is a pixel constituting the foreground or a pixel constituting the background.

The disposing portion may dispose a pattern only when the pixel on the image is a pixel constituting the background.

The pattern can be a pattern keeping contact with an adjacent pattern.

Following components may be added.

The watermark information embedding apparatus may further comprise an imaging portion for converting arbitrary data to the image. The arbitrary data includes document, table, picture, map, photograph and the like. The watermark information embedding apparatus may 1 further comprise a printing portion for printing an image in which the embedding information is embedded in a printable medium.

To solve the above described problem, there is provided a watermark information detecting apparatus for detecting embedding information embedded in an image by electronic watermark technology. The watermark information detecting apparatus comprise a detecting portion for detecting a pattern corresponding to the embedding information, wherein the pattern is a pattern disposed in the image by the watermark information embedding apparatus according to the first aspect.

The watermark information detecting apparatus of the present invention can be applied as follows.

The pattern may be a pattern deteriorated more than when it is embedded by for example, irreversible filter or enlargement/reduction processing or printing or scanning.

The detecting portion may determine a symbol corresponding to the pattern from a detected pattern and restores the embedding information by connecting the symbol.

The detecting portion may carry out filter processing to a minute region in an image by scanning a region larger than the minute region in the image.

A peak value of the filter output value may be searched for by the unit in which a pattern is recorded from a scanned filter processing result so as to specify a pattern position.

The detecting portion may specify a pattern depending on whether the output value of the filter is positive or negative.

The detecting portion may use a filter for reducing a reaction to a pattern of an opposite phase.

The detecting portion may use a filter capable of detecting a signal properly even if the frequency of a pattern drops.

The detecting portion may use a filter using the maximum value or minimum value of the density, luminance, saturation or chromaticity of a pixel in a specific surrounding range as part of a sample value upon detection of an edge.

To solve the above-described problem, according to a third aspect of the present invention, there is provided a watermark information embedding method for embedding information in an image by electronic watermark technology. The watermark information embedding method comprises: coding step of coding embedding information to be embedded into an image; a pattern allocating step of allocating a pattern to each symbol of the coded embedding information; and a disposing step of disposing the pattern corresponding to the embedding information in the image regularly, wherein one or more patterns having a predetermined spatial frequency are allocated to each symbol. The pattern can be a pattern composed of plural pixels having a specific frequency and direction.

The watermark information embedding method of the present invention can be applied as follows.

The correspondence between the pattern and symbol can be specified as follows.

The pattern can specify a corresponding symbol by a direction in which the frequency component is strong. The pattern has an edge component having frequencies perpendicular to each other and can specify a corresponding symbol by a direction of an edge component in which the frequency is strong. The pattern has horizontal and vertical edge components having a specific frequency and can specify a corresponding symbol by the direction of an edge component in which the frequency is strong. Two or more patterns having a near frequency and direction may be allocated to each symbol.

The disposing step may compare a pixel on an image with a pixel of a pattern in the terms of pixel unit when the pattern is disposed and change over whether or not the pattern is disposed in the terms of pixel unit. The comparison can be carried out with the value of pixel. The comparison can be carried out by determining whether the pixel on the image is a pixel constituting the foreground or a pixel constituting the background and whether a pixel of the pattern is a pixel constituting the foreground or a pixel constituting the background.

The disposing step may dispose a pattern only when the pixel on the image is a pixel constituting the background. The pattern can be a pattern keeping contact with an adjacent pattern.

Further, following steps may be included.

The watermark information embedding method may further comprise an imaging step of converting arbitrary data to the image. The arbitrary data includes document, table, picture, map, photograph and the like. The watermark information embedding method may further comprise a printing step of printing an image in which the embedding information is embedded in a printable medium.

To solve the above-described problems, according to a fourth aspect of the present invention, there is provided a watermark information detecting method for detecting an embedding information embedded in an image by electronic watermark technology. The watermark information detecting method comprises a detecting step of detecting a pattern disposed in the image and corresponding to the embedding information, wherein the pattern is a pattern disposed in the image by the watermark information embedding method according to the third aspect.

The watermark information detecting method of the present invention can be applied as follows.

The pattern may be a pattern deteriorated more than when it is embedded due to, for example, irreversible filter or enlargement/reduction or printing or scanning or the like.

The detecting step can determine a symbol corresponding to the pattern from a detected pattern and restore the embedding information by connecting the symbol.

The detecting step may carry out filter processing to a minute region in an image by scanning a region larger than the minute region in the image.

A peak value of the filter output value can be searched for by the unit in which a pattern is recorded from a scanned filter processing result so as to specify a pattern position.

The detecting step may specify a pattern depending on whether the output value of the filter is positive or negative.

The detecting step may use a filter for reducing a reaction to a pattern of an opposite phase.

The detecting step may use a filter capable of detecting a signal properly even if the frequency of a pattern drops.

The detecting step may use a filter using the maximum value or minimum value of the density, luminance, saturation or chromaticity of a pixel in a specific surrounding range as part of a sample value upon detection of an edge.

To solve the above-described problem, according to a fifth aspect of the present invention, there is provided a printed material outputted with information embedded in an image by electronic watermark technology. The printed material of the present invention is characterized in that one or more patterns having a predetermined spatial frequency allocated to each symbol are allocated to the symbol that codes the embedding information to be embedded into an image and the pattern corresponding to the embedding information is disposed in the image regularly. The pattern can be a pattern composed of plural pixels having a specific frequency and direction.

The correspondence between the pattern and the symbol can be specified as follows.

The pattern can specify a corresponding symbol by a direction in which the frequency component is strong. The pattern has an edge component having frequencies perpendicular to each other and can specify a corresponding symbol by a direction of an edge component in which the frequency is strong. The pattern has horizontal and vertical edge components having a specific frequency and can specify a corresponding symbol by the direction of an edge component in which the frequency is strong. Two or more patterns having a near frequency and direction may be allocated to each symbol.

The pixel on an image may be compared with the pixel of a pattern in the terms of pixel unit when the pattern is disposed and whether or not the pattern is disposed may be changed over in the terms of pixel unit. In this case, the comparison can be carried out with the value of pixel. Further, the comparison can be carried out by determining whether the pixel on the image is a pixel constituting the foreground or a pixel constituting the background and whether a pixel of the pattern is a pixel constituting the foreground or a pixel constituting the background.

The disposing step may dispose a pattern only when the pixel on the image is a pixel constituting the background. The pattern can be a pattern keeping contact with an adjacent pattern.

As described above, the present invention can improve information recording density dramatically by expressing information with simple line or dot.

## BRIEF DESCRIPTION OF THE DRAWINGS

FIG. 1 is an explanatory diagram showing the structure of a watermark information embedding apparatus and watermark information detecting apparatus according to a first embodiment.

FIG. 2 is a flow chart showing a flow of processing of watermark information embedding method.

FIG. 3 is an explanatory diagram showing an example of a signal unit and (1) indicates a unit A while (2) indicates a unit B.

FIG. 4 is a sectional view of changes of a pixel value in FIG. 3(1) as seen in the direction of arctan (1/3).

FIG. 5 is an explanatory diagram showing an example of a signal unit, and (3) indicates a unit C, (4) indicates a unit D and (5) indicates a unit E.

FIG. 6 is an explanatory diagram of a background image, and (1) indicates a case of a background formed by arranging units E as a background unit in rows without a gap, (2) indicates an example in which a unit A is embedded in the background image of (1) and (3) indicates an example in which the unit B is embedded in the background image of (1).

FIG. 7 is an explanatory diagram showing an example of a symbol embedding method to a watermark image.

FIG. 8 is a flow chart showing a method for embedding embedding information 16 in the watermark image.

FIG. 9 is a flow chart showing a flow of processing of the watermark detecting portion 32.

FIG. 10 is an explanatory diagram showing a method for synthesizing watermark embedded document image.

FIG. 11 is an explanatory diagram showing an example of watermark embedded document image.

FIG. 12 is an explanatory diagram showing part of FIG. 10 in enlargement.

FIG. 13 is a flow chart showing a flow of the watermark detecting portion 32.

FIG. 14 is an explanatory diagram showing an example of (1) an input image and (2) an input image after a compartmental location of a unit pattern is set up.

FIG. 15 is an explanatory diagram showing an example of a region corresponding to the unit A in the input image.

FIG. 16 is a sectional view as seen in a direction parallel to the propagation direction of the wave in FIG. 15.

FIG. 17 is an explanatory diagram for explaining a method for determining whether a symbol unit embedded in a unit pattern U (x, y) is unit A or unit B.

FIG. 18 is an explanatory diagram showing an example of information restoration.

FIG. 19 is an explanatory diagram showing an example of restoration method of data code.

FIG. 20 is an explanatory diagram showing an example of restoration method of data code.

FIG. 21 is an explanatory diagram showing an example of restoration method of data code.

FIG. 22 is an explanatory diagram showing an example of a signal unit composed of $6 \times 6$ pixels.

FIG. 23 is an explanatory diagram showing an example of a signal unit composed of $18 \times 18$ pixels.

FIG. 24 is an explanatory diagram showing an example of a signal unit expressed with dashed line.

FIG. 25 is an explanatory diagram showing an example of a signal unit having a noise component additionally.

FIG. 26 is an explanatory diagram showing an example of combination of patterns in FIG. 24 and FIG. 25.

FIG. 27 is an explanatory diagram showing an example of a signal unit composed of $4 \times 4$ pixels.

FIG. 28 is an explanatory diagram showing an example of a signal unit composed of $4 \times 4$ pixels.

FIG. 29 is an explanatory diagram showing a case of printing/ scanning a pattern of FIG. 28.

FIG. 30 is an explanatory diagram showing an example of a filter processing mask of $4 \times 4$ pixels.

FIG. 31 is an explanatory diagram showing a case where scanning is executed in the order of raster scan.

FIG. 32 is an explanatory diagram showing an example of a case where a printed material at 600 dpi is scanned at 400 dpi.

FIG. 33 is an explanatory diagram showing an example of a case where a printed material at 600 dpi is scanned at 500 dpi.

FIG. 34 is an explanatory diagram showing an example of a case where a printed material at 600 dpi is scanned at 600 dpi.

FIG. 35 is an explanatory diagram showing an example of a filter processing mask of $3 \times 3$ pixels.

FIG. 36 is an explanatory diagram showing the output characteristic of a filter.

FIG. 37 is an explanatory diagram showing an application example of the filter processing mask.

FIG. 38 is an explanatory diagram showing a result of processing using the filter processing mask of FIG. 37.

FIG. 39 is an explanatory diagram showing an application example of the signal unit.

FIG. 40 is an explanatory diagram showing an application example of the filter processing mask.

## DESCRIPTION OF THE PREFERRED EMBODIMENT

Hereinafter, the preferred embodiments of the watermark information embedding apparatus, watermark information detecting apparatus, watermark information embedding method, watermark information detecting method and printed material of the present invention will be described in detail with reference to the accompanying drawings. In the meantime, components having substantially the same functional structure are supplied with like reference numeral in this specification and drawings and duplicated description thereof is omitted.

(First embodiment)

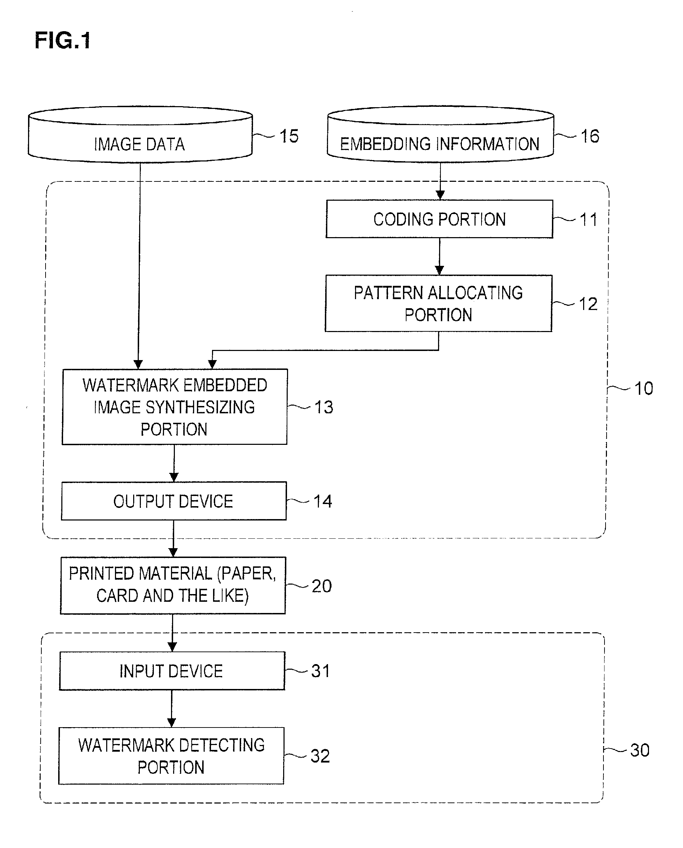

FIG. 1 is an explanatory diagram showing the structure of the watermark information embedding apparatus and watermark information detecting apparatus of this embodiment.

(Watermark information embedding apparatus 10)

The watermark information embedding apparatus 10 is an apparatus which synthesizes a watermark embedded image based on image data and information to be embedded in the image and prints on a paper medium. The watermark information embedding apparatus 10 comprises a coding portion 11, a pattern allocating portion 12, a watermark embedded document synthesizing portion 13 and an output device 14 as shown in FIG. 1. Image data 15 and embedding information 16 to be embedded into the image are inputted to the watermark information embedding apparatus 10.

Image data 15 is inputted from an image input terminal (not shown) of the watermark information embedding apparatus 10. The image data 15 is imaged data of arbitrary data such as document, tables, picture, map, photograph or a combination of these data. The imaging is executed by a method of reading with a scanner or using a document outputted with a word processor as a print image. Although this embodiment will be described on a premise of printing on a white paper surface with black ink (monochrome), the present invention is not restricted to this example but may be applied to a case of printing with colors (multi-colors) also. On the other hand, the embedding information 16 is information (character string, image and acoustic data) to be embedded in paper medium in other form than characters.

The coding portion 11 executes coding processing of data of the embedding information 16. The pattern allocating portion 12 executes allocation processing of watermark signal (pattern) to each coded symbol. That is, the embedding information 16 is converted to numerals digitally and N coded (N: two or more) and each symbol is allocated to preliminarily prepared watermark signals. According to the watermark signal of this embodiment, a wave having an arbitrary direction and wavelength is expressed by allocating dots in a rectangular region of an arbitrary size and symbols are allocated to the direction and wavelength of the wave. Such a watermark signal is called signal unit hereinafter. The detail of the signal unit will be described later.

The watermark embedded document synthesizing portion 13 draws a pattern expressing the embedding information on an image inputted from the image input terminal directly. The watermark embedded document synthesizing portion 13 of this embodiment creates a watermark embedded document image in this way. The output device 14 is an output unit such as a printer, which prints watermark embedded document image on paper medium. Therefore, the coding portion 11, the pattern allocating portion 12 and the watermark embedded document synthesizing portion 13 may be achieved as a function in the printer driver.

(Printed material 20)

The printed material 20 is a paper or card printed with the embedding information 16 embedded in the image data 15 and physically stored and managed.

(Watermark information detecting apparatus 30)

The watermark information detecting apparatus 30 fetches in a document printed on paper medium as image and restores the embedding information 16 embedded therein. The watermark information detecting apparatus 30 comprises an input device 31 and a watermark detecting portion 32 as shown in FIG. 1.

The input device 31 is an input unit such as a scanner, which fetches the printed material 20 as gray image composed of multi-valued tones into a computer. The image to be inputted may be just an image outputted by the electronic watermark embedding apparatus 10, an image deteriorated by irreversible compression of JPEG or the like, an image reduced by a digital filter or the like, an image obtained by photographing or scanning a printed material.

The watermark detecting portion 32 detects a signal unit drawn on an image and extracts the embedding information 16 by executing filtering processing on all or part of the image fetched in by the input device 31.

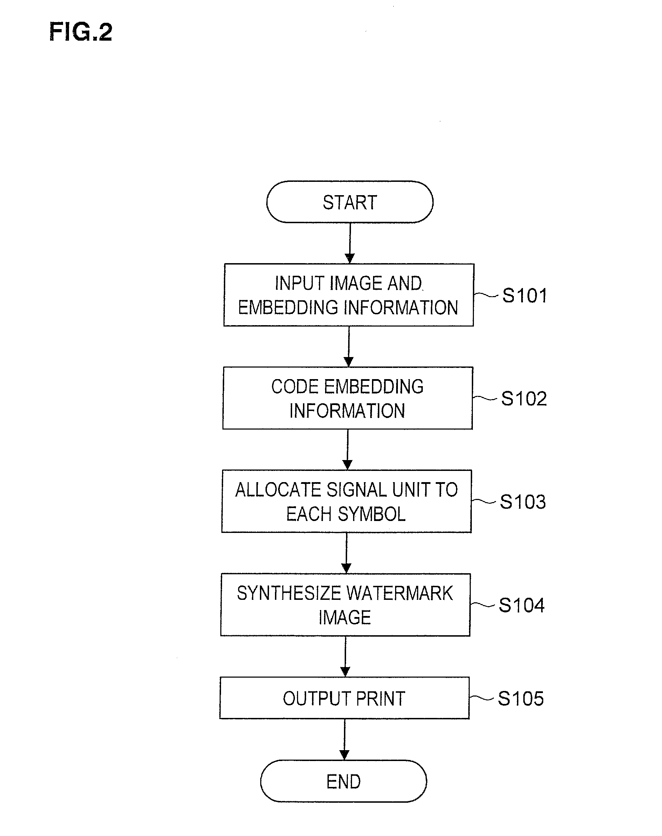

The watermark information embedding apparatus 10 and the watermark information detecting apparatus 30 of this embodiment have the above-described structure. Next, the operations of the watermark information embedding apparatus 10 and the watermark information detecting apparatus 30 will be described. First, the operation of the watermark information embedding apparatus 10 will be described with reference to the flow chart of FIG. 2.

(Step S101)

First, the image data 15 and the embedding information 16 are inputted to the watermark image embedding apparatus 10 (step S101). As described above, the document data 15 is data including font information and layout information and created with a word processing software or the like. The document data 15 is, for example, binary data of white and black and white pixel (whose value is 1) on the image is a background while the black pixel (whose value is 0) is a character region (region coated with ink). On the other hand, the embedding information 16 includes a variety of data such as character, sound, and image.

(Step S102)

Next, the embedding information 16 is converted to N-codes (step S102). Although N is arbitrary, it is assumed that N = 2 to facilitate description in this embodiment. Thus, it is assumed that the code generated in step S 102 is binary code, which is expressed with a bit string of 0 and 1. In this step S 102, the embedding information 16 may be coded as it is or encrypted embedding information 16 may be coded.

(Step S 103)

Next, a signal unit is allocated to each symbol coded (step S103). The watermark signal of this embodiment is a representation of wave having an arbitrary wavelength and direction with arrangement of dots (black pixels).

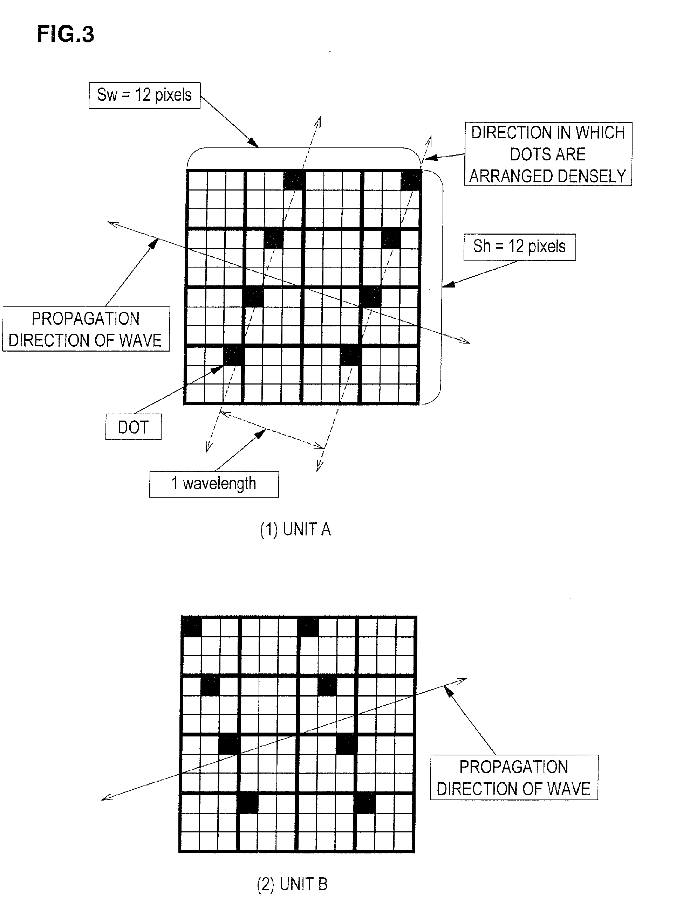

The signal unit to be allocated to each symbol in step S103 will be described. FIG. 3 is an explanatory diagram showing an example of the signal unit.

The width and height of the signal unit are assumed to be Sw and Sh respectively. Although Sw and Sh may be different from each other, it is assumed that Sw = Sh to facilitate description in this embodiment. The unit of the length is a number of pixels and in the example of FIG. 3, Sw = Sh = 12. The size of the signal when printed on a paper depends on resolution of the watermark image and if it is assumed that, for example, the watermark image is 600 dpi (dot per inch: unit of resolution which is a number of dots per 1 inch), the width and height of the signal unit in FIG. 3 are 12/600 = 0.02 (inch) on a printed material.

A rectangle having the width of Sw and the height of Sh is called "signal unit" as a unit of the signal. In FIG. 3 (1), a distance between dots is dense in the direction of arctan (3) (arctan is an inverse function of tan) with respect to the horizontal axis and the propagation direction of wave is arctan (-1/3). Hereinafter, this signal unit is called unit A. In FIG. 3(2), the distance between the dots is dense in the direction of arctan (-3) with respect to the horizontal axis and the propagation direction of wave is arctan (1/3) . Hereinafter, this signal unit is called unit B.

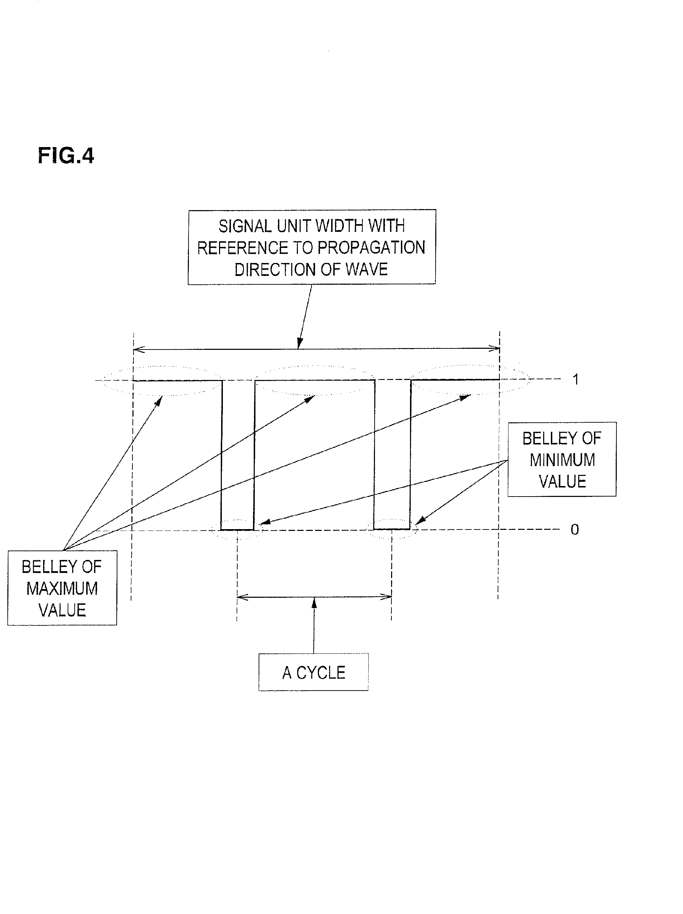

FIG. 4 is a sectional view of changes of pixel value in FIG. 3(1) as seen in the direction of arctan (1/3) . In FIG. 4, a portion in which a dot is disposed acts as the belly (point in which the amplitude maximizes) of a minimum value of the wave and a portion in which no dot is disposed acts as the belly of a maximum value of the wave.

Because there exist two regions in which dots are disposed densely in a unit, the frequency per unit is 2 in this example. Because the propagation direction of the wave is perpendicular to a direction in which the dots are disposed densely, the wave of the unit A is arctan (-1/3) with respect to the horizontal direction and the wave of the unit B is arctan (1/3) . In the meantime, when the direction of arctan (a) is perpendicular to the direction of arctan (b), it comes that a $\times$ b = -1.

According to this embodiment, a symbol 0 is allocated to a signal unit expressed by the unit A and a symbol 1 is allocated to a signal unit expressed by the unit B. These are called symbol units.

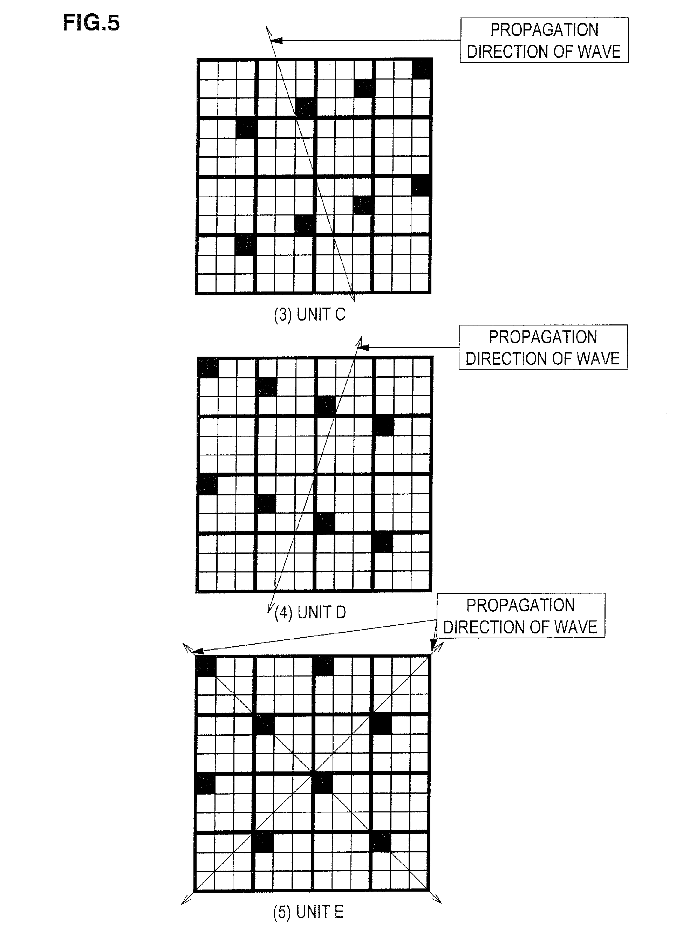

As the signal unit, for example, dot arrangements as shown in FIG. 5(3)-(5) can be considered as well as those shown in FIGS. 3(1), (2).

In FIG. 5(3), the distance between dots is dense in the direction of arctan (1/3) with respect to the horizontal axis and the propagation direction of the wave is arctan (-3). Hereinafter this signal unit is called unit C.

In FIG. 5(4), the distance between dots is dense in the direction of arctan (-1/3) with respect to the horizontal axis and the propagation direction of the wave is arctan (3). Hereinafter, this signal unit is called unit D.

In FIG. 5(5), the distance between dots is dense in the direction of arctan (1) with respect to the horizontal axis and the propagation direction of the wave is arctan (-1). In FIG. 5(5), it can also be considered that the distance between dots is dense in the direction of arctan (-1) with respect to the horizontal axis and the propagation direction of the wave is arctan (1). Hereinafter, this signal unit is called unit E.

Because a plurality of combination patterns of the units in which the symbol 0 and symbol 1 are allocated can be considered as well as the combinations allocated in the above, it is possible to make an embedded signal difficult to interpret by secreting which signal unit is allocated to which symbol.

If the embedding information 16 is coded with quarternary code in step S103 shown in FIG. 2, for example, symbol 0, symbol 1, symbol 2, symbol 3 may be allocated respectively to the unit A, unit B, unit C, and unit D.

Because the quantities of dots in a single unit are equal in an example of the signal unit shown in FIGS. 3, 5, the apparent density of the watermark image becomes uniform by disposing these units without any gap. Thus, it looks that gray image having a single density is embedded as a background on a printed paper surface.

In order to achieve such an effect, the unit E defined as a background unit (signal unit in which no symbol is allocated), for example, a background for the watermark image is formed by disposing them without any gap; and when a symbol unit (unit A, unit B) is embedded in the watermark image, the background unit (unit E) at a place in which the symbol unit is to be embedded is replaced with the symbol unit (unit A, unit B).

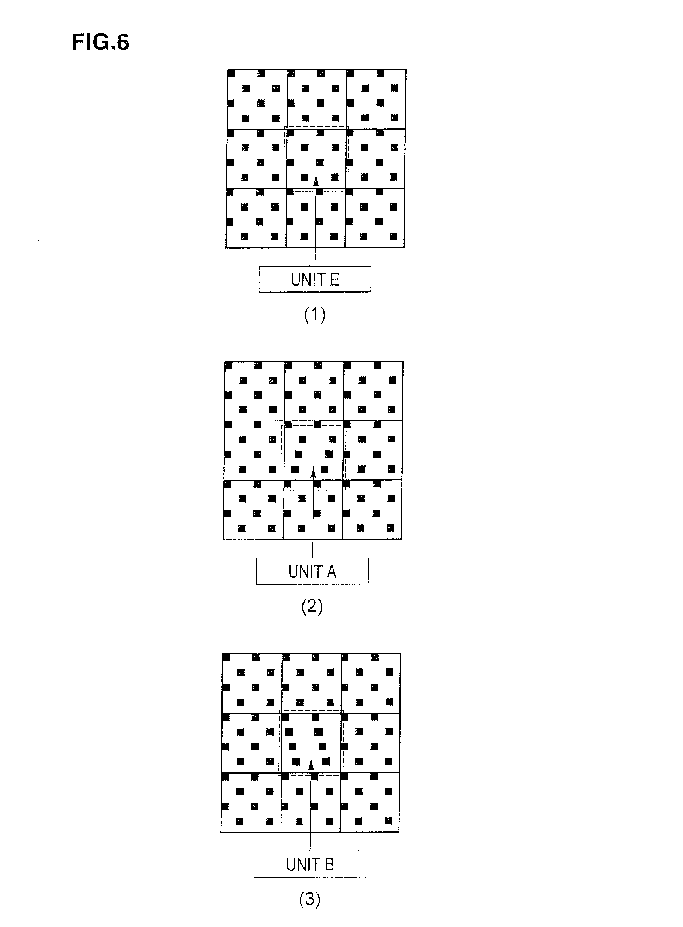

FIG. 6 is an explanatory diagram showing a case where with the unit E defined as a background unit, a background is formed for the watermark image by disposing them without any gap. FIG. 6(2) shows an example in which the unit A is embedded in the background image of FIG. 6(1) and FIG. 6(3) shows an example in which the unit B is embedded in the background image of FIG. 6(1). Although this embodiment will describe a method for using the background unit as a background for the watermark image, the watermark image may be generated by disposing only the symbol units.

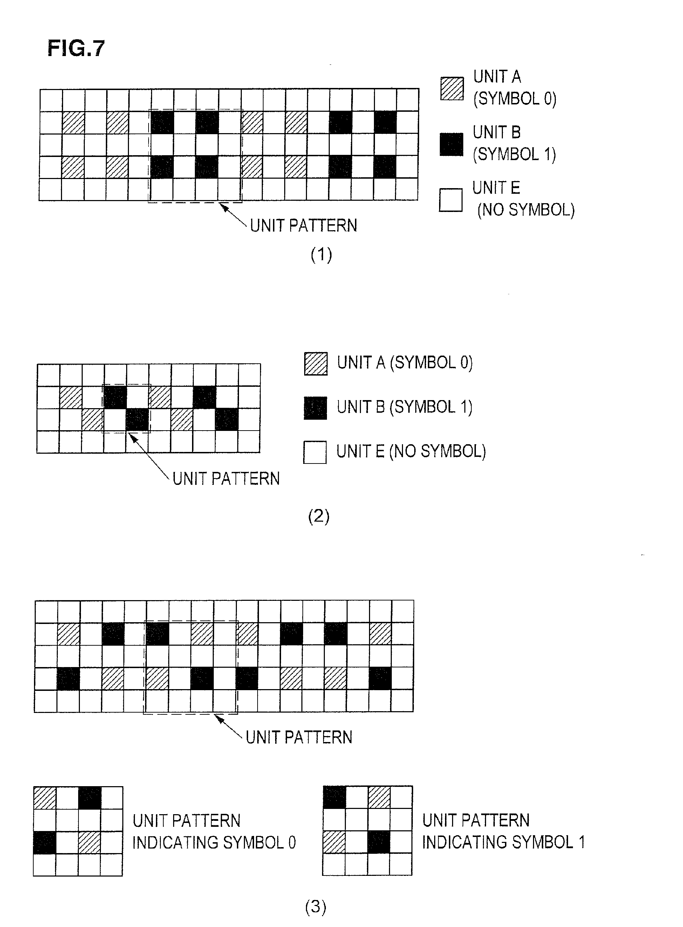

Next, the method for embedding the signal unit into the watermark image will be described with reference to FIG. 7.

FIG. 7 is an explanatory diagram showing an example of the method for embedding the signal unit into the watermark image. Here, a case for embedding a bit string of "0101" will be described as an example.

As shown in FIGS. 7(1), (2), the same symbol units are embedded repeatedly. This aims at preventing the symbol unit from not being detected when detecting a signal if a character in document overlaps the embedded symbol unit and the repetitive number and arrangement pattern of the symbol unit (hereinafter referred to as unit pattern) are arbitrary.

That is, as an example of the unit pattern, the repetitive number may be 4 (four symbol units exist in a single unit pattern) as shown in FIG. 7(1) or the repetitive number may be 2 (two symbol units exist in a unit pattern) as shown in FIG. 7(2) or the repetitive number may be 1 (only one symbol unit exits in a unit pattern).

Although in FIGS. 7(1), (2), a single symbol is given to a single symbol unit, a symbol may be applied to an arrangement pattern of the symbol units a shown in FIG. 7(3).

How many bits of information can be embedded in a watermark image of a page depends upon the size of the signal unit, size of the unit pattern and the size of a document image. How many signals are embedded in the horizontal direction and vertical direction of a document image may be determined by detecting signals as already known or may be determined by computing from the size of the image and size of the signal unit inputted through the input device.

If unit patterns can be embedded by Pw in the horizontal direction and by Ph in the vertical direction of a watermark image of a single page, a unit pattern at an arbitrary position of the image is expressed as U (x, y), x = 1 to Pw and y = 1 to Ph and U (x, y) is called "unit pattern matrix". Further, the quantity of bits which can be embedded in a page is called "embedding bit number". The embedding bit number is Pw × Ph.

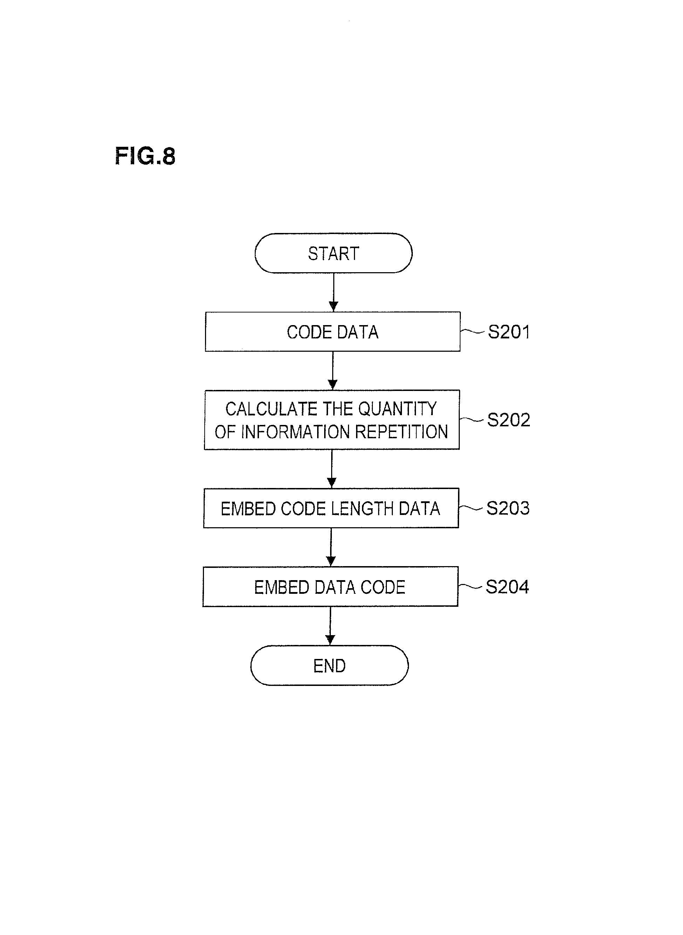

FIG. 8 is a flow chart showing a method for embedding the embedding information 16 in a watermark image.

Here, a case of embedding the same information into a watermark image of a single page repeatedly will be described. This aims at enabling the embedded information to be fetched out even if the embedded information is vanished because an entire unit pattern is painted out when the watermark image is overlapped with a document image, by embedding the same information repeatedly.

First, the embedding information 16 is converted to N codes (step S201). This is the same as step S102 of FIG. 2. Hereinafter, coded data is called data code and data code expressed by a combination of unit patterns is called data code unit Du.

Next, how many times the data code unit can be embedded in an image repeatedly is calculated from a code length (bit number here) of data code and the embedding bit number (step S202). In this embodiment, it is assumed that the code length data of the data code is inserted into a first row of a unit pattern matrix. It is permissible not to embed the code length data into the watermark image with the code length of the data code set as a fixed length.

The frequency Dn of embedding the data code unit is calculated according to the following expression with the data code length set as Cn.

[Expression 1]

$$Dn = \left\lfloor \frac{Pw \times (Ph - 1)}{Cn} \right\rfloor$$

wherein $\lfloor A \rfloor$ is a maximum integer not exceeding A.

If it is assumed that the residual is Rn(Rn = Cn - (Pw × (Ph - 1))), it comes that data code units of Dn times and a unit pattern corresponding to head Rn bits of the data code are embedded in the unit pattern matrix. However, the Rn bit which is the residual portion does not always need to be embedded.

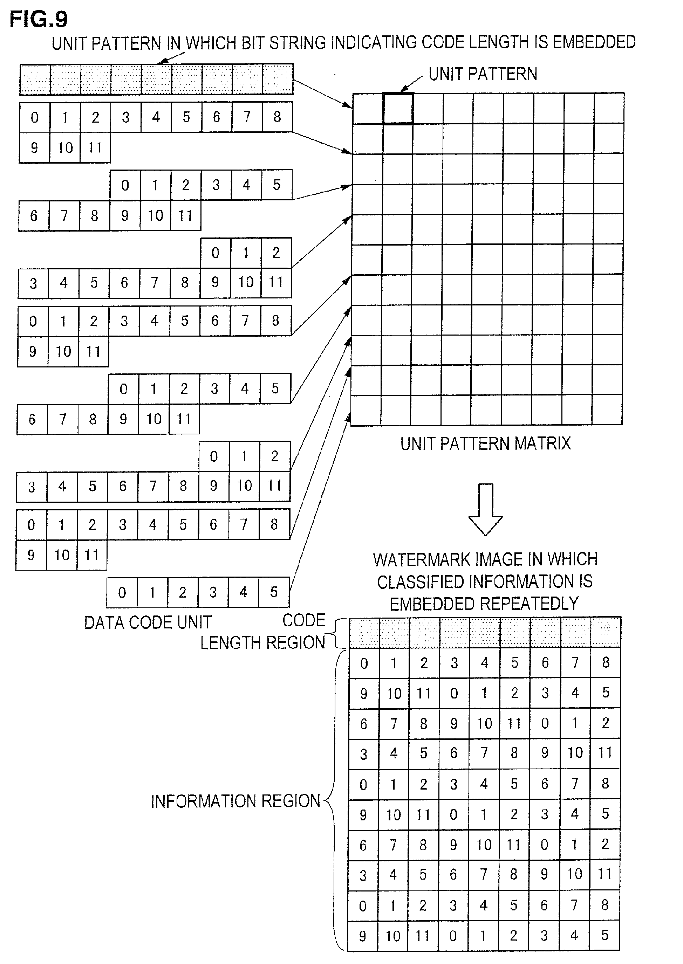

In description of FIG. 9, it is assumed that the size of the unit pattern matrix is 9 × 11 (11 rows, 9 columns) and the data code length is 12 (numbers 0 to 11 in the same Figure indicates each symbol of the data code).

Next, the code length data is embedded into a first row of the unit pattern matrix (step S203). Although FIG. 9 explains a case where the code length is expressed with 9-bit data and this 9-bit data is embedded once, if the width Pw of the unit pattern matrix is large enough, the code length data can be embedded repeatedly like the data code.

Further, the data code units are embedded in a second row and following of the unit pattern matrix repeatedly (step S204). The data code units are embedded in order in the row direction from MSB (most significant bit) or LSB (least significant bit) of the data code. In the example of FIG. 9, the data code unit is embedded seven times and head 6 bits of the data code are embedded.

As for the method for embedding data, the data may be embedded continuously in the row direction as shown in FIG. 9 or may be embedded continuously in the column direction.

Allocation of a watermark signal in the pattern allocating portion 12 (step S103) has been described above. Next, step S104 and following will be described with reference to FIG. 2.

(Step S104)

The watermark embedded document image synthesizing portion 13 overlaps the image data 15 and the watermark signal allocated by the pattern allocating portion 12 (step S104). The value of each pixel in the watermark embedded document image is calculated by logical product operation (AND) of a document image value and pixel values corresponding to the watermark image if the image data 15 is of binary image. That is, if any one of the document image and watermark image is 0 (black), the pixel value of the watermark embedded document image is 0 (black) and others are 1 (white).

On the other hand, if the image data is multi-valued data of three or more values, following processing is carried out.

(Drawing method of color pattern)

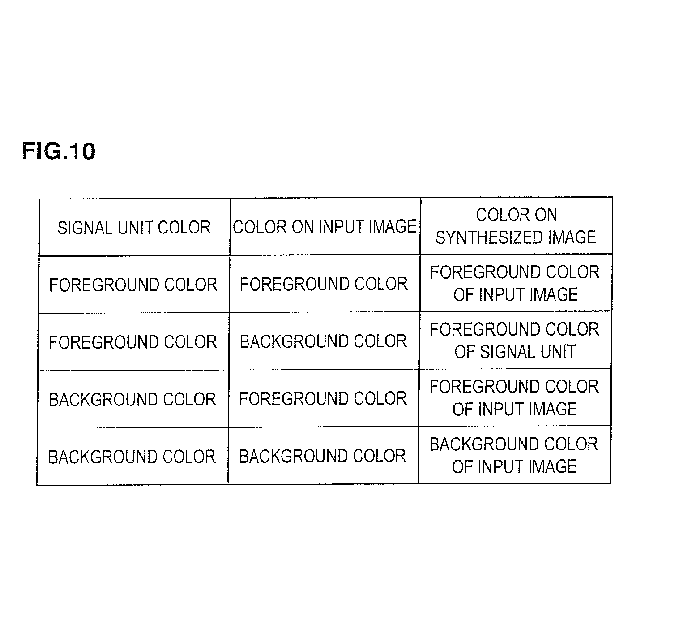

An inputted image has a background color constituting a background of a document or graphics and foreground composed of characters, lines, diagrams and the like. The signal unit has a foreground color expressing a signal and a background color acting as a background as well. If it is drawn on an image with the watermark embedded image synthesizing portion 13, the background color of the signal unit is handled as a transparent color and the color of an image may be left on an outputted image in the background color of the signal unit as shown in FIG. 10. The foreground color of the inputted image may be left on the outputted image with preference at a portion in which the foreground color of the inputted image overlaps the foreground color of the signal unit. Further, if the background color on the inputted image overlaps the foreground color of the signal unit, the foreground color of the signal unit may be left on the outputted image. Further, only the luminance component may be synthesized or other color component may be overlaid.

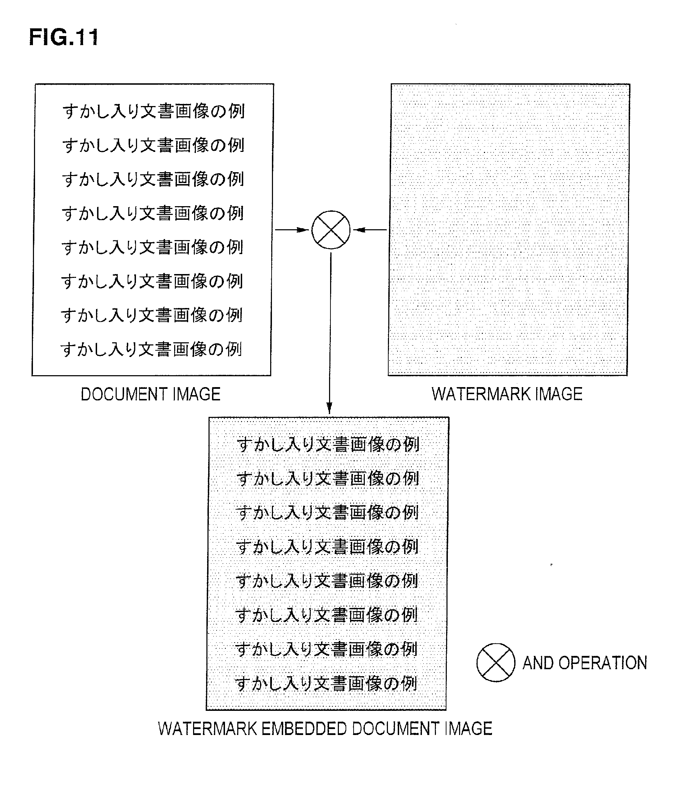

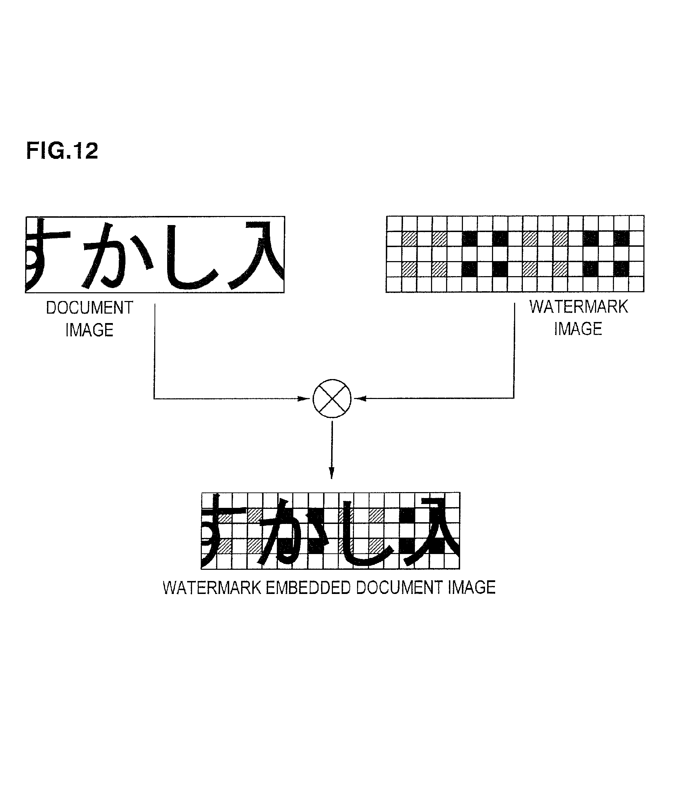

According to the above-described method, a watermark embedded image in which the inputted image and the signal unit overlap each other is generated. FIG. 11 is an explanatory diagram showing an example of the watermark embedded document image. FIG. 12 is an explanatory diagram showing part of FIG. 11 in enlargement. The unit pattern shown in FIG. 7(1) is used here.

(Step S 105)

A watermark embedded image generated in this way is outputted by the output device 14.

(Step S105)

The operation of the watermark information embedding apparatus 10 has been described above. Next, the operation of the watermark information detecting apparatus 30 will be described with reference to FIGS. 12 to 20.

(Watermark detecting portion 32)

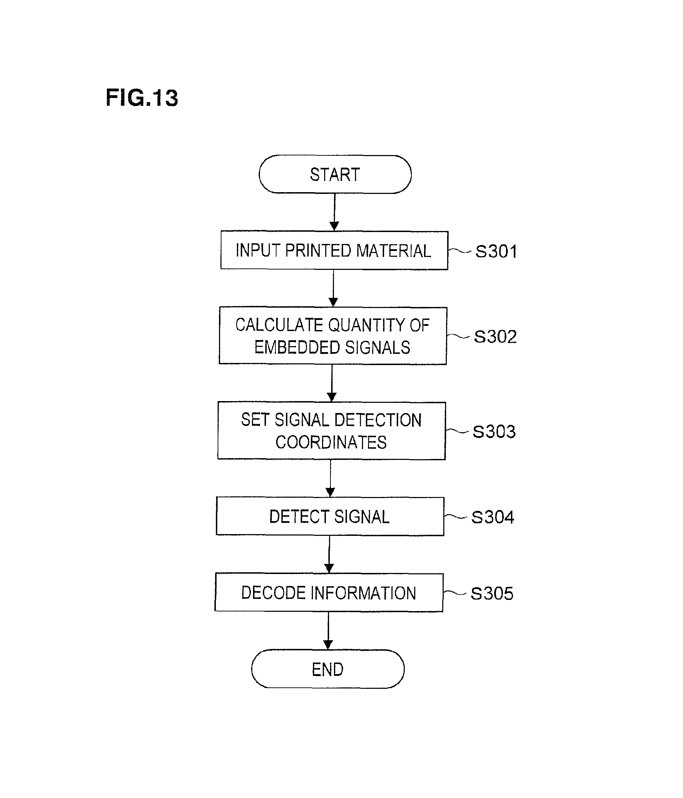

FIG. 13 is a flow chart showing the flow of processing of the watermark detecting portion 32.

First, the printed material 20 is inputted to a memory of computer or the like with the input device 31 such as a scanner (step S301). The image read in by the input device is called input image. The input image is a multi-valued image and will be explained as gray image having 256 tones. Although the resolution of the input image (resolution when reading with the input device 31) may be different from that in the aforementioned watermark information embedding apparatus 10, it is assumed that the resolution is the same in the following description. Further, it is assumed that the input image is subjected to correction by rotation or elongation or contraction.

Next, how many unit patterns are embedded is calculated depending on the size of the input image and the size of the signal unit (step S302). For example if it is assumed that the size of the input image is W (width) $\times$ H (height) and that the size of the signal unit is Sw $\times$ Sh and the unit pattern is constituted of Uw $\times$ Uh units, the quantity of unit patterns (N = Pw $\times$ Ph) embedded in the input image is calculated as follows.

[Expression 2]

$$Pw = \frac{W}{Sw \times Uw}, Ph = \frac{H}{Sh \times Uh}$$

However, if the watermark information embedding apparatus 10 and the watermark information detecting apparatus 30 have different resolutions, the size of the signal unit in an input image is normalized according to a ratio of those resolutions before the above-described calculation is performed.

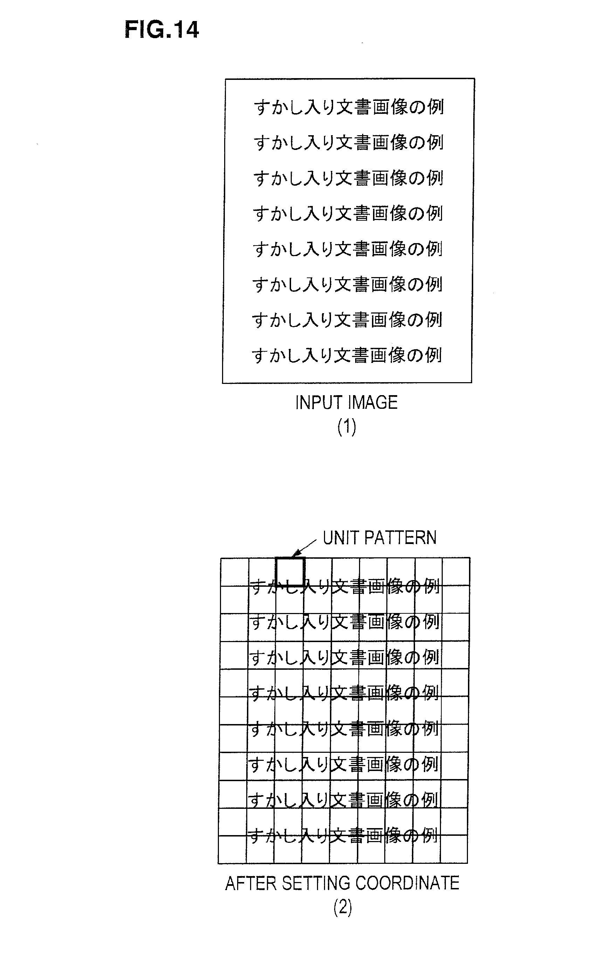

Next, a compartmental location of the unit pattern to the input image is set up based on the quantity of unit patterns calculated in step S302 (step S303). FIG. 14 shows an example of the input image (FIG. 14(1)) and the input image (FIG. 14(2)) after the compartmental location of the unit pattern is set up.

Next, a symbol unit is detected in each compartmental location so as to restore a unit pattern matrix (step S304). Hereinafter the detail of signal detection will be described.

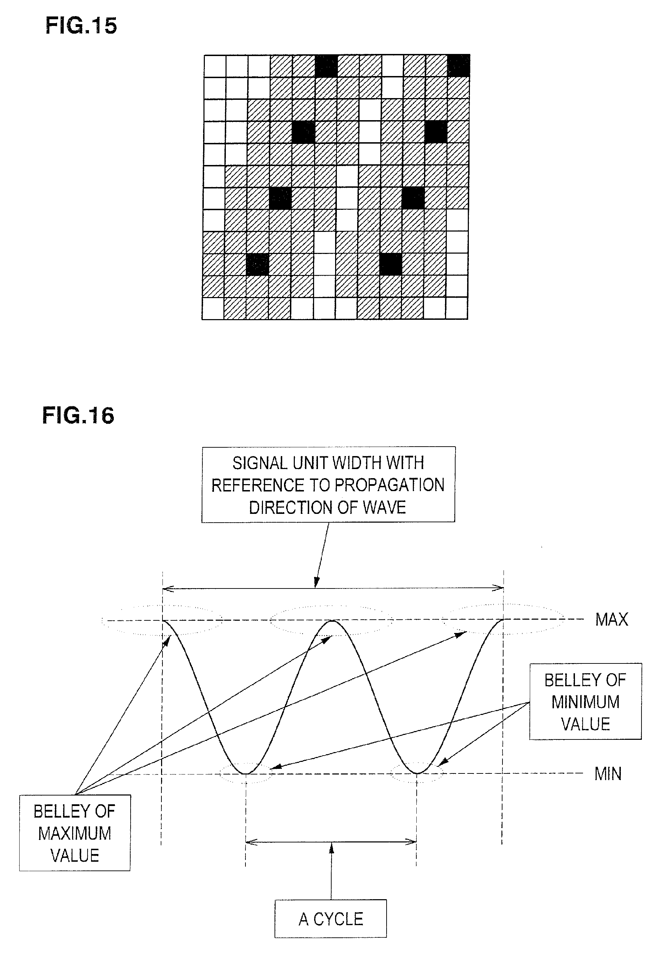

FIG. 15 is an explanatory diagram showing an example of a region corresponding to the unit A shown in FIG. 3(1) in the input image. Although the signal unit in FIG. 3 is of binary image, this is multi-valued image. Because the density changes continuously due to blur of ink or the like when the binary image is printed, the surrounding of a dot becomes an intermediate color between white and black. Therefore, a section taken in a direction parallel to the propagation direction of wave in FIG. 15 is shown in FIG. 16. Although FIG. 4 provides a rectangular wave, FIG. 16 provides a smooth wave.

Although, actually, a number of noise components are added to the input image because of a local change in paper thickness, stain of printed document or instability of the output device or an image input device, a case where there is no noise component will be described here. However, using a method explained here enables signals to be detected stably from an image with the noise components as well.

Hereinafter, a two-dimensional wavelet filter capable of defining the frequency, direction of wave and influence range at the same time is used to detect a signal unit from the input image. Although an example using the Gabor filer which is one of the wavelet filter will be mentioned below, it is not always necessary to use the Gabor filer if the filter has the same character as the Gabor filter and further, a method of defining a template having the same dot pattern as the signal unit and then executing pattern matching may be used.

A Gabor filter G (x, y), x = 0 to gw-1, y = 0 to gh -1 is indicated below. The gw, gh are sizes of a filter and here the same size as the signal unit embedded by the watermark information embedding apparatus 10.

[Expression 3]

$$G(x, y) = \exp\left[-\pi\left\{\frac{(x - x0)^2}{A^2} + \frac{(y - y0)^2}{B^2}\right\}\right] \times \exp\left[-2\pi i\{u(x - x0) + v(y - y0)\}\right]$$

*i*: imaginary number unit
x= 0~ *gw*-1,y=0~ *gh*- 1, x0= *gw*/2, y0=*gh*/2
**A**: influence range in horizontal direction
**B:** influence range in vertical direction

**tan$^{-1}$(u/v)**: direction of wave, $\sqrt{u^2 + v^2}$ : frequency

To detect the signal, the Gabor filters having the same frequency, wave direction and size as the symbol unit embedded in the watermark image are prepared by the same quantity as the kinds of the embedded signal units. The Gabor filters corresponding to the unit A and unit B in FIG. 3 are called filter A and filter B respectively.

A filter output value at an arbitrary position of the input image is calculated according to convolution between the filter and image. Because the Gabor filter has an actual number filter and an imaginary number filter (the imaginary number filter is a filter deflected by half wavelength with respect to the actual number filter), their square mean value is assumed to be a filter output value. For example, if it is assumed that convolution between the actual number filter of the filter A and an image is Rc and convolution between the imaginary number filer and the image is Ic, an output value F(A) is calculated according to the following expression.

[Expression 4]

$$F(A) = \sqrt{Rc^2 + Ic^2}$$

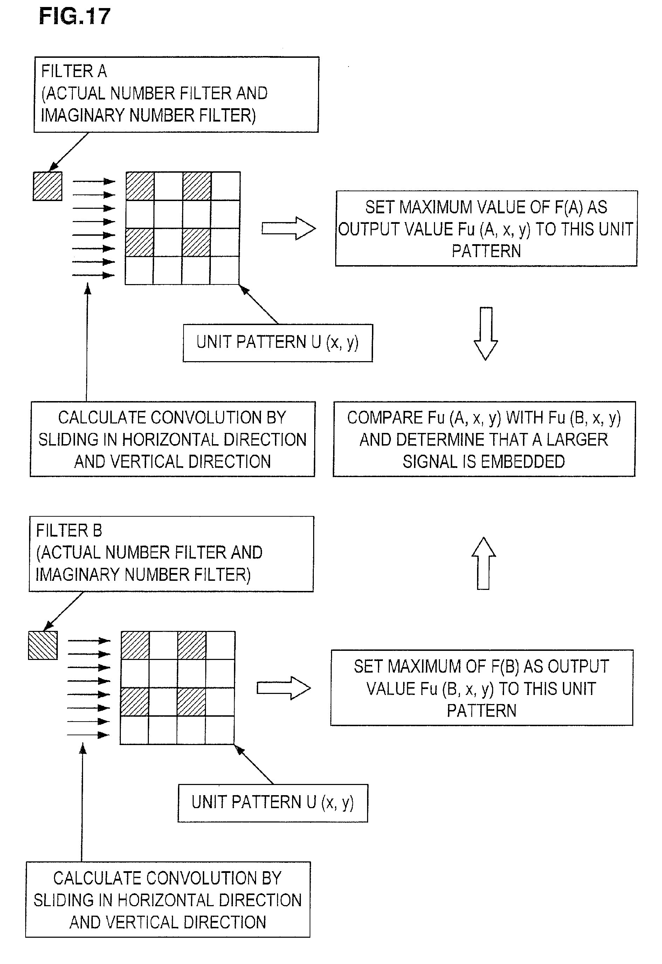

FIG. 17 is an explanatory diagram for explaining a method for determining whether a symbol unit embedded in the unit pattern U (x, y) comparted in step S303 is unit A or unit B.

Symbol determining step to the unit pattern U (x, y) is carried out as follows.

(1) A maximum value as a result of measuring F(A) about all positions in the unit pattern U (x, y) by moving the position of the filter (A) is regarded to be an output value of the filter A to the unit pattern U (x, y) and this is assumed to be Fu (A, x, y).
(2) An output value of the filter B to the unit pattern U (x, y) is calculated in the same way as (1) and this is assumed to be Fu (B, x, y).
(3) Fu (A, x, y) and Fu (B, x, y) are compared with each other and if Fu (A, x, y) ≥ Fu (B, x, y), the symbol unit embedded in the unit pattern U (x, y) is determined to be unit A and if Fu (A, x, y) < Fu (B, x, y), the symbol unit embedded in the unit pattern U (x, y) is determined to be unit B.

A step width for moving the filter in (1) and (2) is arbitrary and only an output value at a typical position on the unit pattern may be calculated. Further, if the absolute value of a difference between Fu (A, x, y) and Fu (B, x, y) is less than a preliminarily determined threshold, it is permissible to consider the determination as impossible.

If the maximum value of F(A) exceeds a preliminarily determined threshold in a process of calculating convolution by shifting the filter in (1), it is permissible to determine the symbol unit embedded in the U (x, y) to be unit A and cancel the processing. In (2) also, if the maximum value of F(B) exceeds a preliminarily determined threshold, it is permissible to determine the symbol unit embedded in the U (x, y) to be unit B.

The detail of signal detection (step S304) has been described above. Return to the flow chart of FIG. 13 again and following step S305 will be described. In step S305, data code is reconstructed by combining symbols of the unit pattern matrix so as to restore its original information.

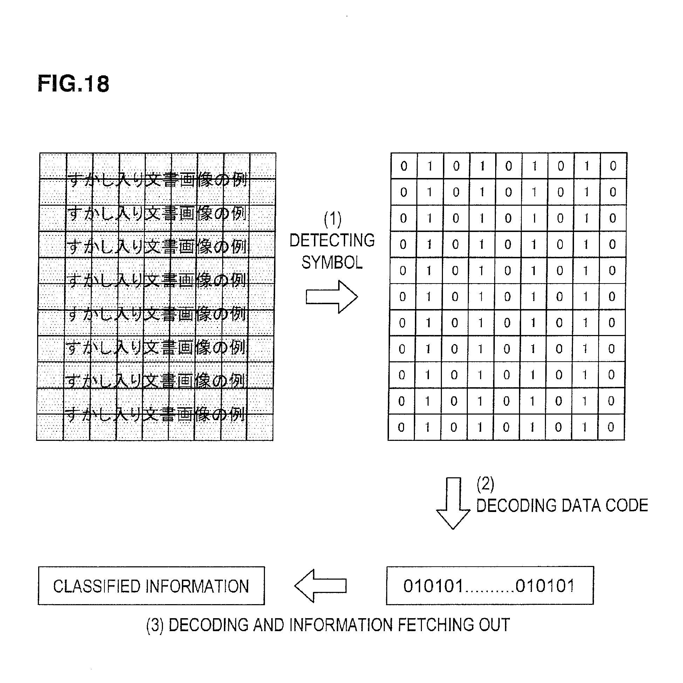

FIG. 18 is an explanatory diagram showing an example of information restoration. The steps for information restoration are as follows.

(1) Detecting a symbol embedded in each unit pattern.
(2) Restoring a data code by combining symbols.
(3) Fetching out information embedded by decoding data code.

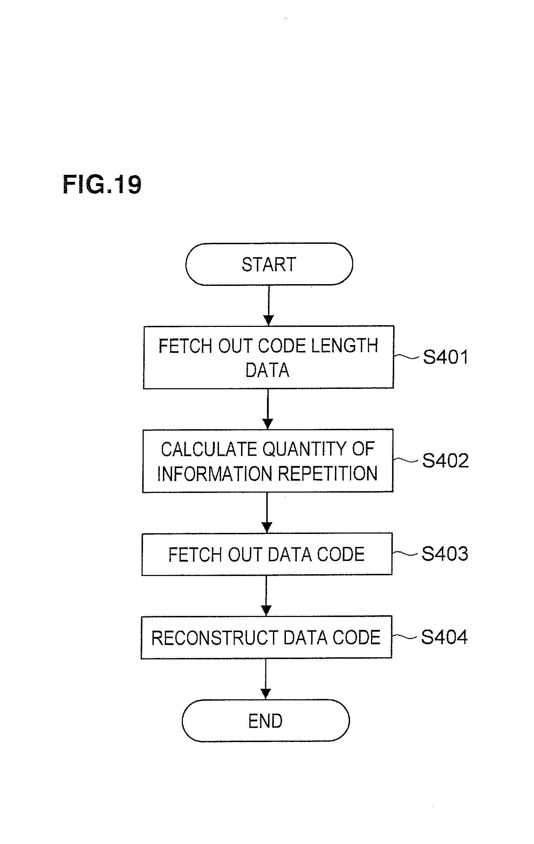

FIGS. 19 to 21 are explanatory diagrams showing an example of data code restoration method. The restoration method is basically an inverse processing to FIG. 8.

First, a code length data portion is taken out of a first row of the unit pattern matrix and the code length of embedded data code is obtained (step S401).

Next, a frequency Dn of embedding the data code unit and a residual Rn are calculated based on the size of unit pattern matrix and the code length of data code obtained in S401 (step S402).

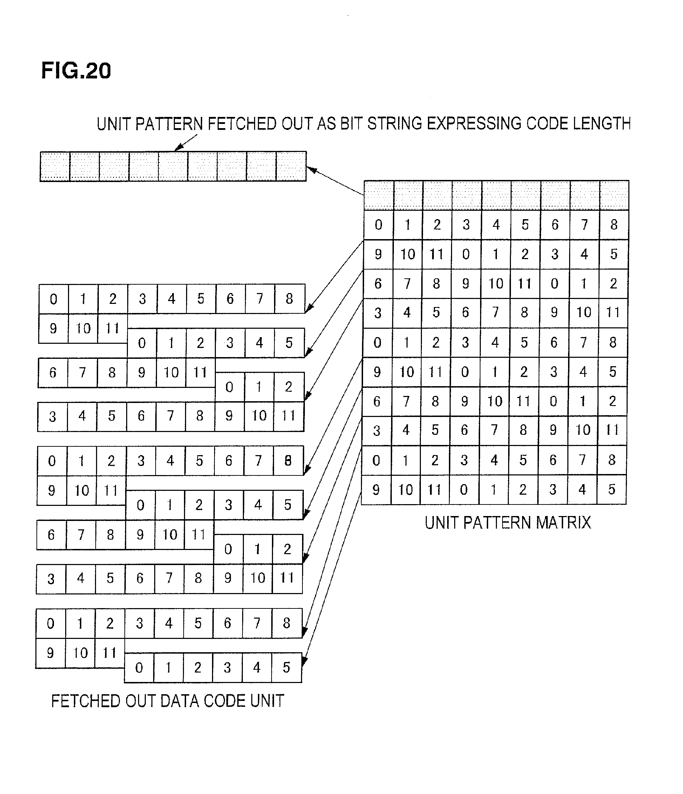

Next, data code unit is taken out from a second row and following of the unit pattern matrix according to a reverse method to step S203 (step S403). In the example shown in FIG. 20, 12 pattern units are disassembled in order from U (1, 2) (second row, first column), (U(1, 2) to U3(3, 3), U4(4, 3) to U(6, 4), ...). Because Dn = 7, Rn = 6, the 12 pattern units (data code unit) are taken out seven times and 6 unit patterns (corresponding to upper six of the data code units) (U (4, 11) to U(9, 11)).

Next, the embedded data code is reconstructed by calculating bit certainty factor to data code unit taken out in step S403 (step S404). Hereafter, the bit certainty factor calculation will be described.

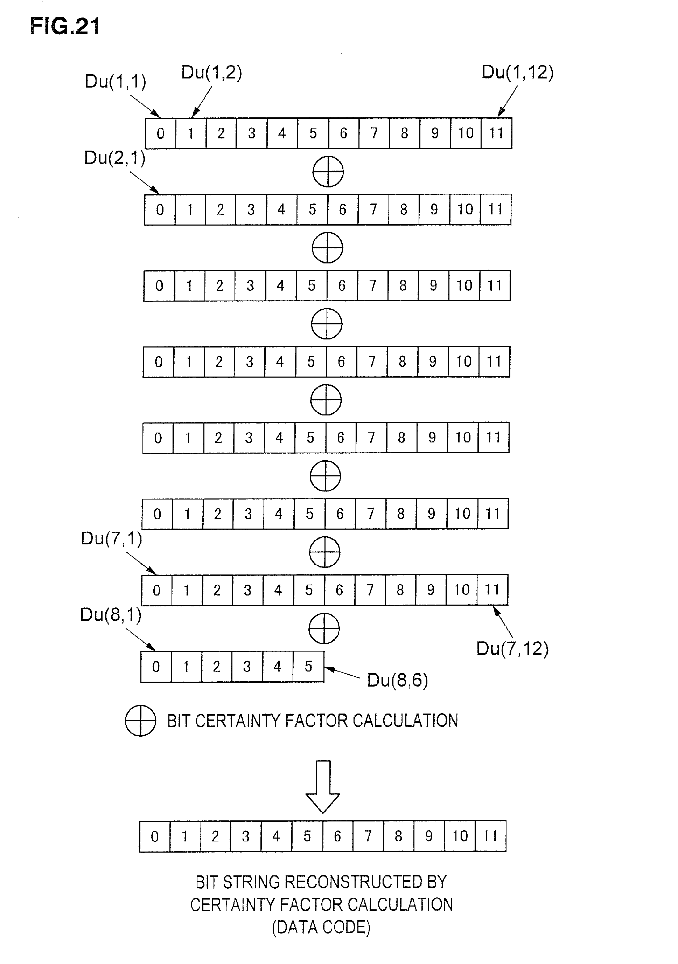

The data code units taken out first from the second row, first column of the unit pattern matrix are named Du (1, 1) to Du (12, 1) as shown in FIG. 21 and Du (1, 2) to Du (12, 2) ... are expressed in order. The residual portions are named Du (1, 8) to Du (6, 8). The bit certainty factor calculation aims at determining the value of each symbol of the data code by, for example decision by majority for each element of the data code unit. As a consequence, finally, the data code can be restored properly even if signal detection cannot be performed properly (bit inversion error or the like) from any unit in any data code unit due to overlapping of character regions or stain on the paper surface.

More specifically, the first bit of the data code is determined to be 1 if a signal detection result of Du (1, 1), Du (1, 2), ... Du (1, 8) is 1 more often and 0 if it is 0 more often. Likewise, the second bit of the data code is determined by decision by majority according to a signal detection result of Du (2, 1), Du (2, 2), ... Du (2, 8) and the 12th bit of the data code is determined by decision by majority according to a signal detection result of Du (12, 1), Du (12, 2), ... Du (12, 7) (up to Du (12, 7) because Du (12, 8) does not exist).

The bit certainty factor calculation can be performed by adding an output value of the signal detection filter of FIG. 17. Assuming that a symbol of 0 is allocated to the unit A of FIG. 3 (1) and a symbol of 1 is allocated to the unit B of FIG. 3(2) and that a maximum value of an output value by the filter A to Du (m, n) is Df (A, m, n) and a maximum value of the output value by the filter B to Du (m, n) is Df (B, m, n), the M bit of the data code is determined to be 1 if

[Expression 5]

$$\sum_{n=1}^{Dn} Df(A, M, n) \ge \sum_{n=1}^{Dn} Df(B, M, n)$$

and in other cases, 0, where in case of N < Rn, addition of Df is performed up to n = 1 to Rn + 1.

Although a case of embedding the data code repeatedly has been described, a method not repeating the data code unit can be realized by using error correcting code when coding data.

As described above, this embodiment secures following excellent effects.

(1-1) Because the embedding information is expressed by a difference in arrangement of dots, font of original document or pitch of character interval or space interval is not changed.

(1-2) Because the dot pattern allocating the symbol and the dot pattern allocating no symbol have the same density (number of dots in a specified interval), it looks that half tone having a constant density is applied to the background of a document to the eyes of person so that existence of information is not apparent.

(1-3) Interpretation of embedded information is made difficult by secreting the dot pattern allocating the symbol and the dot pattern not allocating the dot pattern.

(1-4) Because the pattern expressing information is a collection of small dots and embedded entirely as a background of a document, even if an embedding algorithm is publicized, information embedded in a printed document cannot be falsified.

(1-5) Because the embedded signal is detected depending on a difference in the direction of wave (change of density) (without any detailed detection in the unit of a single pixel), stable information detection is enabled even if stain exists on a printed document except serious stain.

(1-6) Because the same information is embedded repeatedly and upon detection, information restoration is carried out using all the information embedded repeatedly, even if a signal portion is concealed by a large font character or the paper is stained so that information is partially lost, the embedded information can be taken out stably.

(1-7) Although the Japanese Patent Application Laid-Open No. 2003-101762 has adopted a structure of generating document image and watermark image separately, according to this embodiment, the document image and the watermark image do not need to be generated separately because the pattern can be rendered directly to an image.

(Second embodiment)

This embodiment mentions an application example of the signal unit.

(Application example 1)

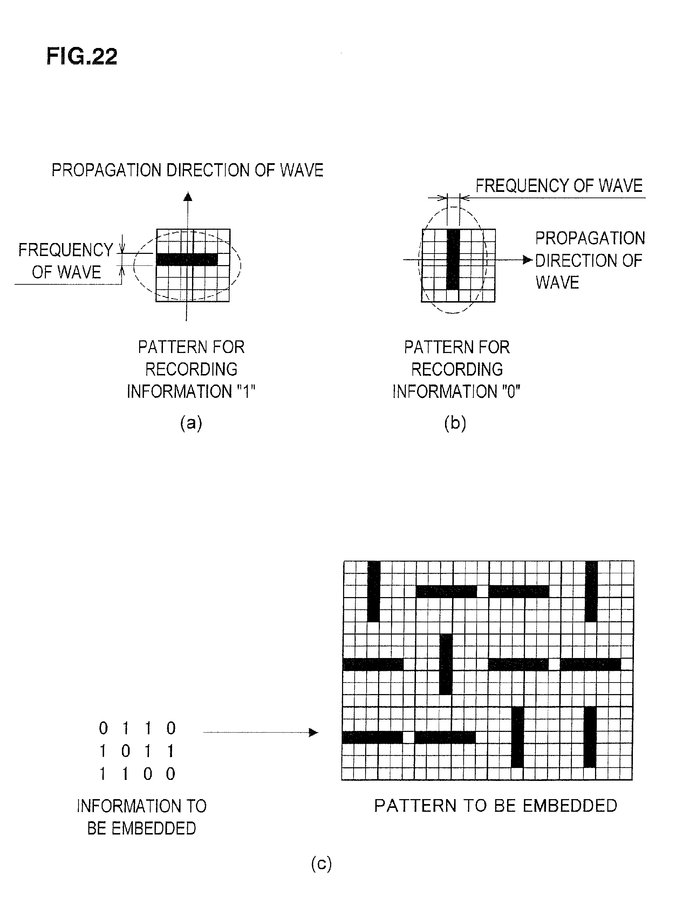

A signal unit of FIG. 22 is constituted of $6 \times 6$ pixels, expressing a wave of horizontal components and vertical components having a frequency of about a pixel in width. FIG. 22(a) indicates an example of a pattern recording information "1" and FIG. 22(b) indicates an example of a pattern recording information "0". This signal unit allows information of 3 rows $\times$ 4 columns = 12 bits to be embedded in a region of $24 \times 18$ pixels as shown in FIG. 22(c).

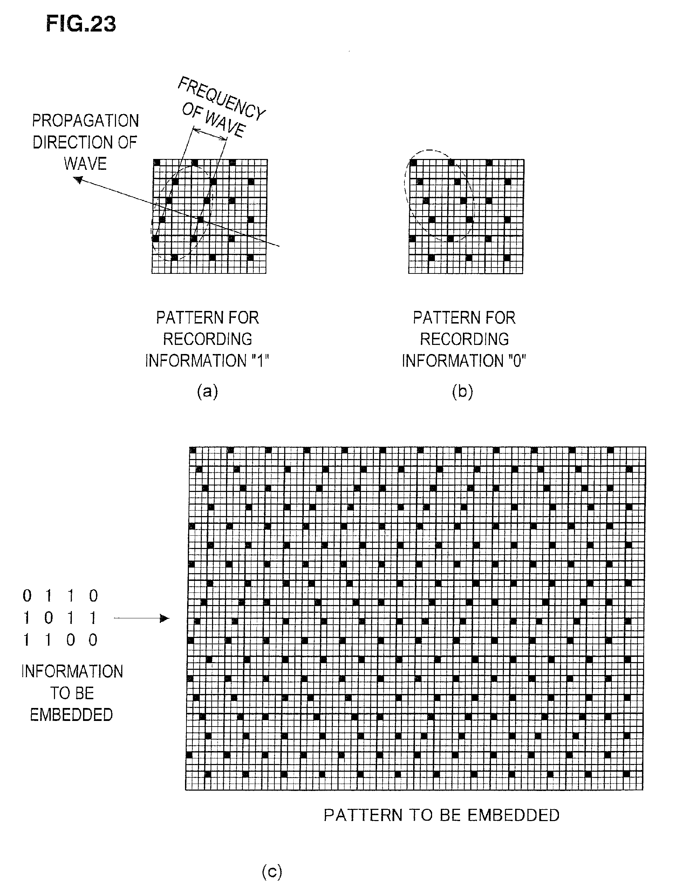

According to the first embodiment, the signal unit is constituted of $18 \times 18$ pixels as shown in FIG. 23. FIG. 23 (a) indicates an example of pattern recording information "1" and FIG. 23(b) indicates an example of pattern recording information "0". This signal unit requires a region of $72 \times 54$ pixels if the embedding information is information of 3 rows $\times$ 4 columns = 12 bits as shown in FIG. 23(c). Because this embodiment (application example 1) enables the embedding in a region of $24 \times 18$ pixels, the area of an embedding region can be 1/9 to embed the same information. Further, if information is embedded in a region having the same area, information nine times larger can be embedded.

(Application example 2)

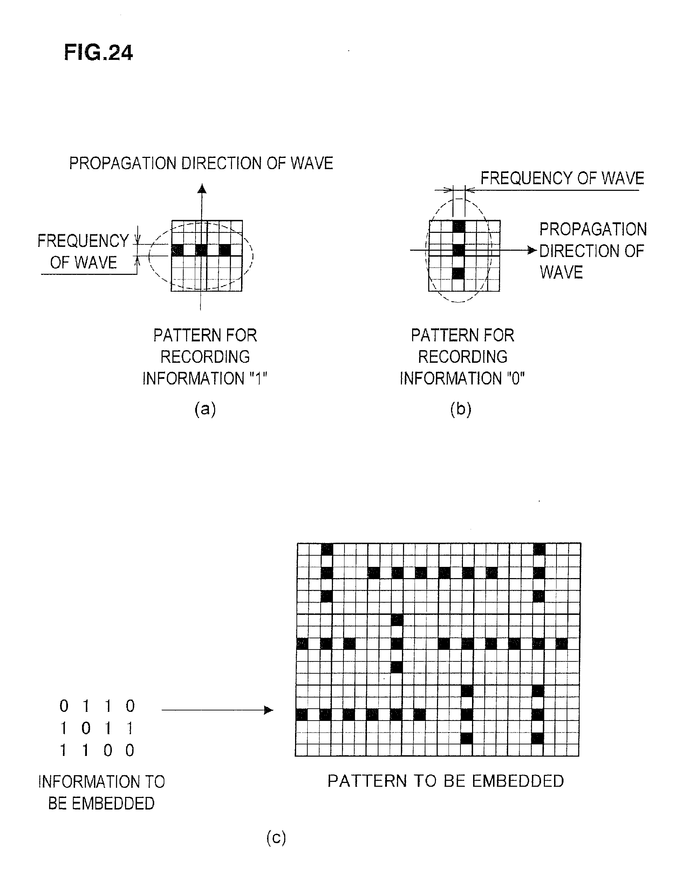

In the signal unit of FIG. 24, the pattern of FIG. 22 is expressed with dashed line. Even if the pattern is expressed with the dashed line as shown in FIG. 24, the propagation direction or frequency of the wave does not change. FIG. 24 (a) indicates an example of a pattern recording information "1" and FIG. 24(b) indicates an example of a pattern recording information "0". Such a signal unit enables information of 3 rows $\times$ 4 columns = 12 bits to be embedded in a region of 24 $\times$ 18 pixels as shown in FIG. 24(c).

(Application example 3)

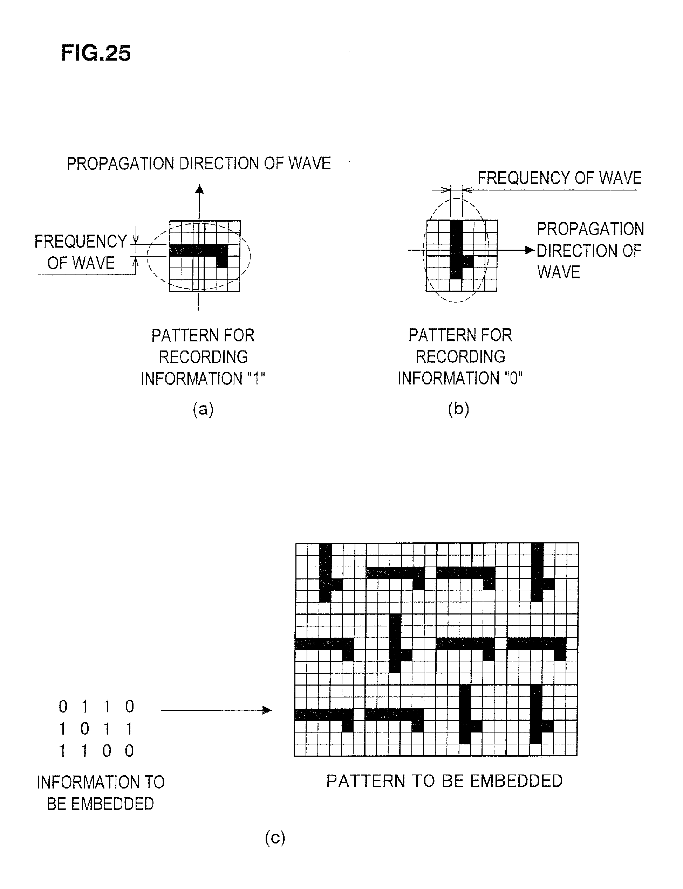

The signal unit of FIG. 25 has a component additionally acting as noise to the frequency component of the signal. Even if the component acting as noise is added to the frequency component of the signal as shown in FIG. 25, an influence on information extraction is very small because the frequency components in the horizontal direction and vertical direction are strong. FIG. 25(a) indicates an example of a pattern recording information "1" and FIG. 25(b) indicates an example of a pattern recording "0". Such a signal unit enables information of 3 rows $\times$ 4 columns = 12 bits to be embedded in a region of 24 $\times$ 18 pixels as shown in FIG. 25(c).

(Application example 4)

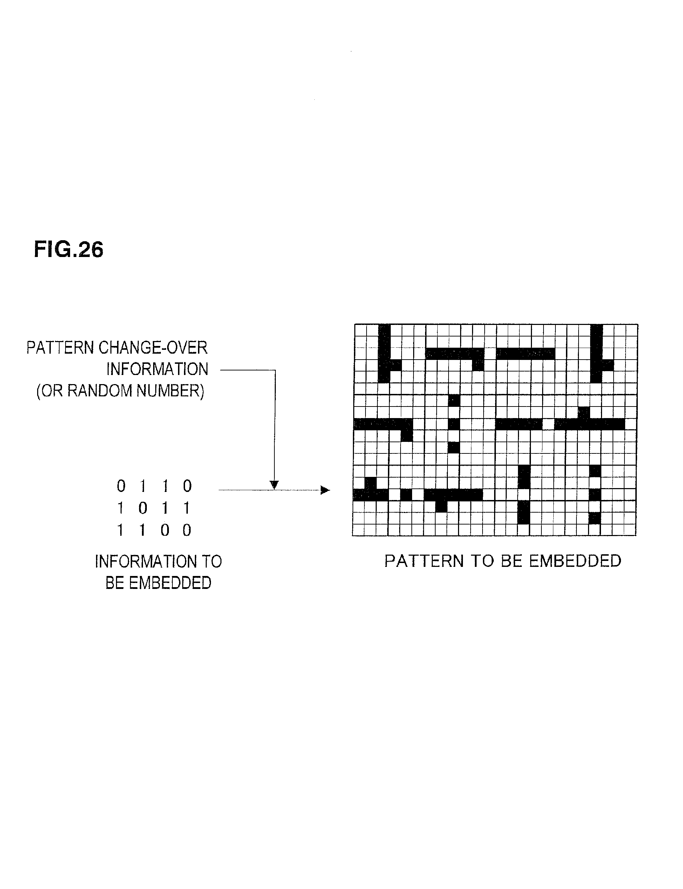

FIG. 26 shows a combination of the patterns in FIG. 24 and FIG. 25. That is, an embedding pattern is generated by changing over the patterns of FIG. 24 and FIG. 25 according to pattern change-over information or random number. 0/1 can be expressed in the same filter by combining plural patterns as shown in FIG. 26. Such a signal unit enables information of 3 rows $\times$ 4 columns = 12 bits to be embedded in a region of 24 $\times$ 18 pixels as shown in FIG. 26.

(Application example 5)

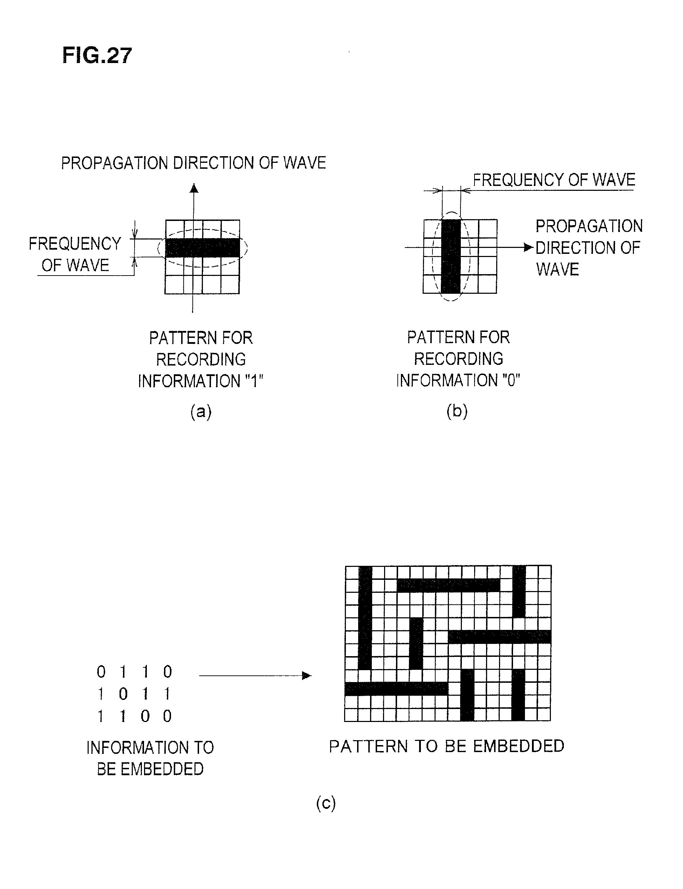

The signal unit of FIG. 27 is constituted of 4 $\times$ 4 pixels and each expresses a wave of horizontal component and vertical component having a frequency of about a pixel in width. FIG. 27(a) indicates an example of a pattern recording information "1" and FIG. 27(b) indicates an example of a pattern recording "0". Such a signal unit enables information of 3 rows $\times$ 4 columns to be embedded in a region of 18 $\times$ 12 pixels as shown in FIG. 27(c).
According to the first embodiment, the signal unit is constituted of 18 $\times$ 18 pixels as shown in FIG. 23 and if embedding information is information of 3 rows $\times$ 4 columns = 12 bits, a region of 72 $\times$ 54 pixels is required. Because this embodiment (application example 5) enables the signal unit to be embedded in a region of 12 $\times$ 16 pixels, if the same information is embedded, the area of a region for embedding can be less than 1/20. Further, if information is embedded in a region having the same area, information about 20 times larger can be embedded.

(Application example 6)

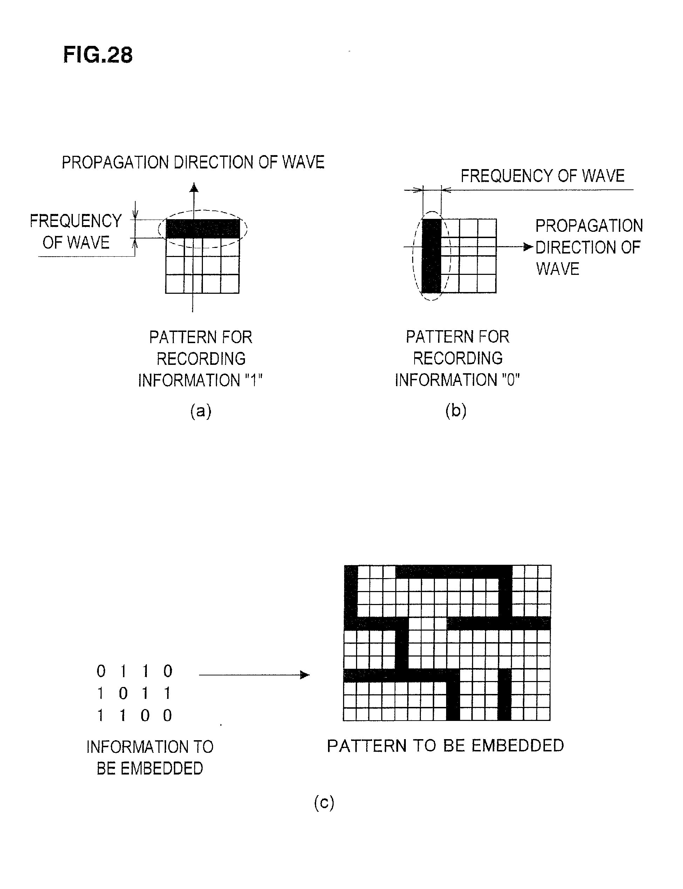

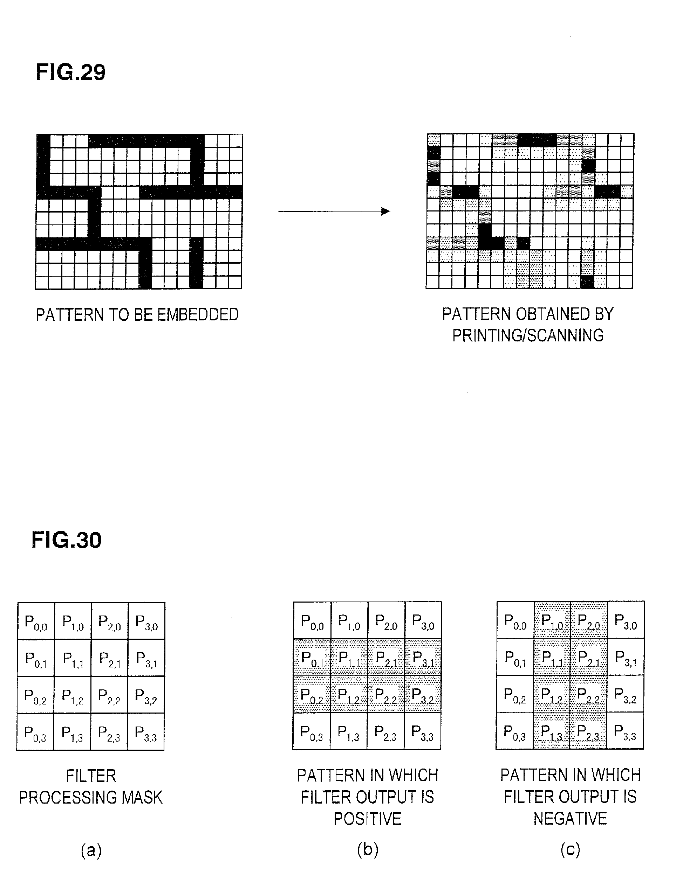

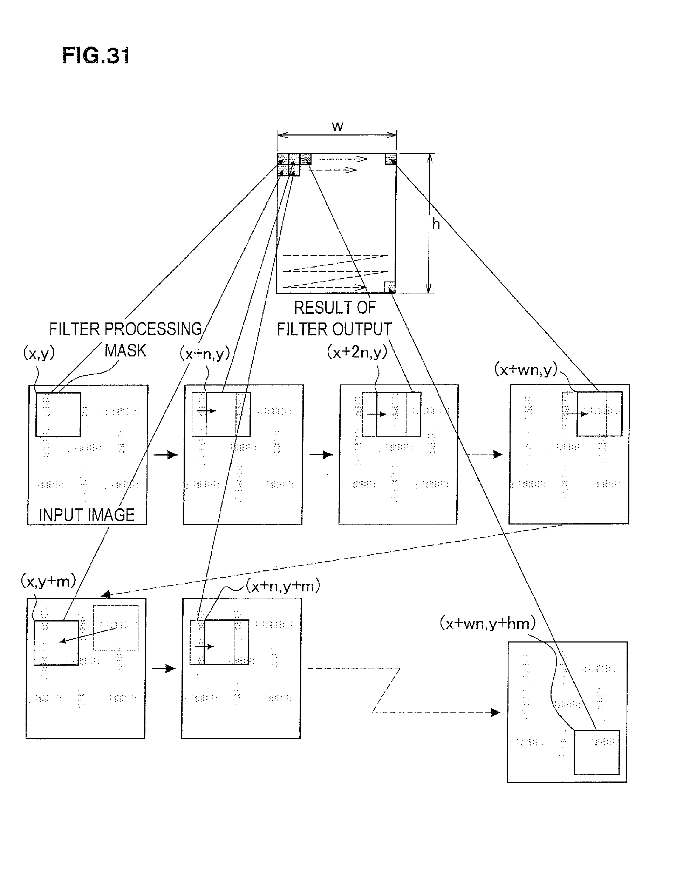

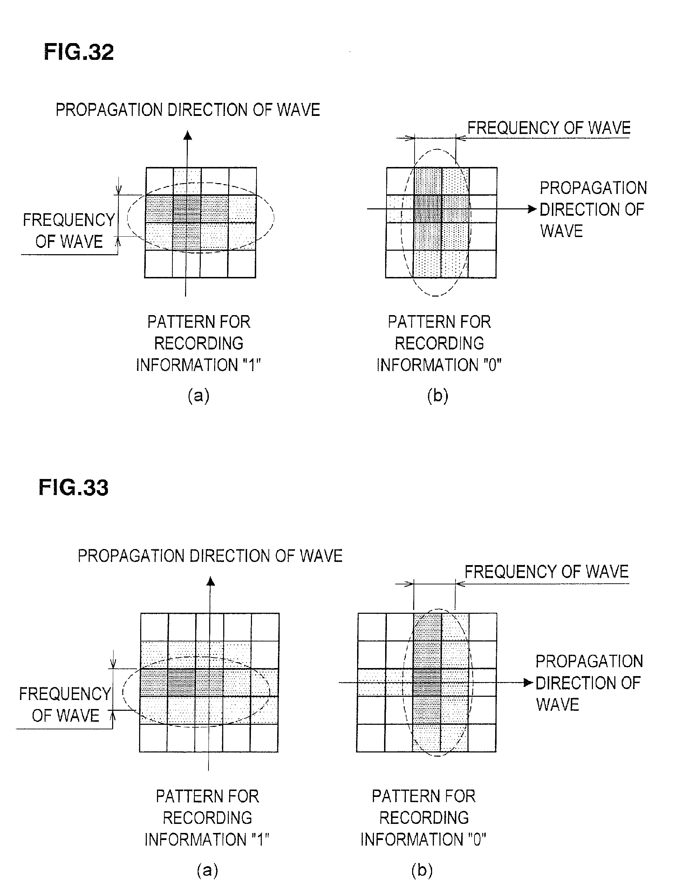

The signal unit of FIG. 28 is constituted of 4 $\times$ 4 pixels like the signal unit of FIG. 27 and makes contact with any pattern on the top, bottom, right or left. Such a signal unit enables information of 3 rows $\times$ 4 columns = 12 bits to be embedded in a region of 18 $\times$ 12 pixels like FIG. 27(c), as shown in FIG. 28(c). Further, a pattern on a medium outputted from a printer is printed more clearly as shown in FIG. 29 so that signal detection accuracy may be improved.
Accompanied by change of the signal unit on the embedding side, processing of the detection side is changed as follows. Description will be made below on what differs from the first embodiment.
Because the pattern of this embodiment has edge components in horizontal direction and vertical direction and each pattern has a frequency of a certain width, filter processing is performed to distinguish these two patterns from other patterns. FIG. 30 shows an example of filter processing mask in case of 4 $\times$ 4 pixels. In case of filter processing mask of FIG. 30(a), for example, FIG. 30(b) is a pattern in which filter output is positive and FIG. 30(c) is a pattern in which the filter output is negative.
The filter processing may be carried out by scanning an entire image by moving a filter processing mask having M $\times$ N pixels (for example, 4 $\times$ 4 pixels) by n pixels in the X and Y directions. The scanning may be carried out in the order of raster scanning as shown in FIG. 31. Further, the filter processing may be divided, for example by scanning the entire image by filtering in the horizontal direction and after that scanning the entire image by filtering in the vertical direction.
If a printed material at 600 dpi is scanned at 400 dpi, a pattern whose high frequency components are dulled is generated as shown in FIG. 32 because of the characteristic of printer/scanner. If it is scanned at 500 dpi, the pattern becomes as shown in FIG. 33. In FIGS. 32 to 34, (a) indicates a pattern for recording information "1" and (b) indicates a pattern for recording information "0".

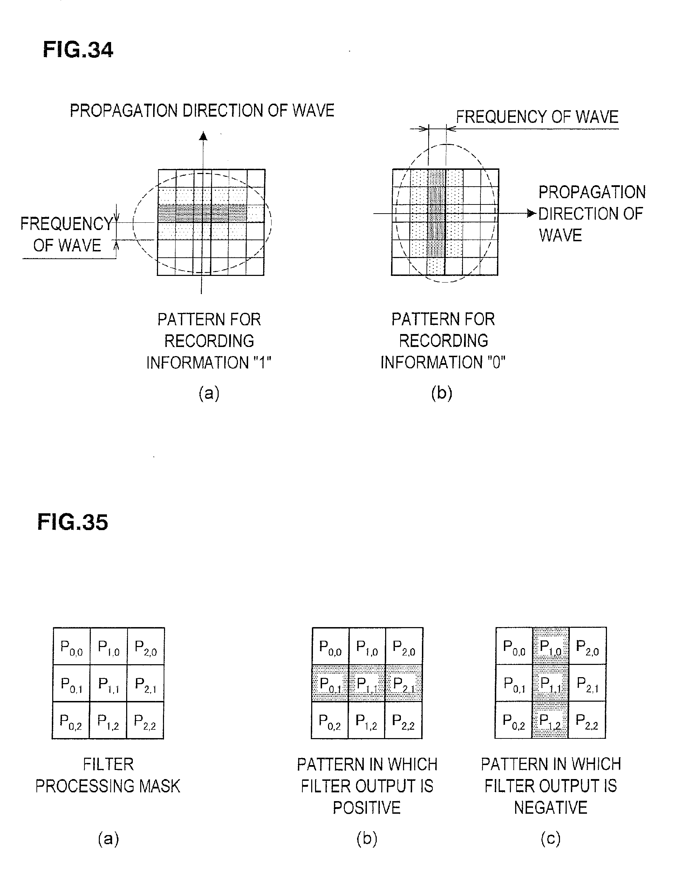

A case of scanning at 400 dpi will be described here. Because a pattern shown in FIG. 32 is detected when scanning at 400 dpi according to this embodiment, a filter processing mask of 3 × 3 pixels shown in FIG. 35 is used. In case of the filter processing mask of FIG. 35(a), for example, FIG. 35(b) is a pattern in which the filter output is positive and FIG. 35(c) is a pattern in which the filter output is negative. In the meantime, this example can be applied to a case of scanning at the same resolution as when a pattern of 4 × 4 is printed. The filter processing with this mask can be expressed as indicated with the expression (1) below.

[Expression 6]

$$f = \sum_{i=0}^{2} \left( \left( P_{i,0} - P_{i,1} \right) \times \left( P_{i,2} - P_{i,1} \right) \right) - \sum_{j=0}^{2} \left( \left( P_{0,j} - P_{1,j} \right) \times \left( P_{2,j} - P_{1,j} \right) \right)$$

$$\cdot \cdot \cdot (1)$$

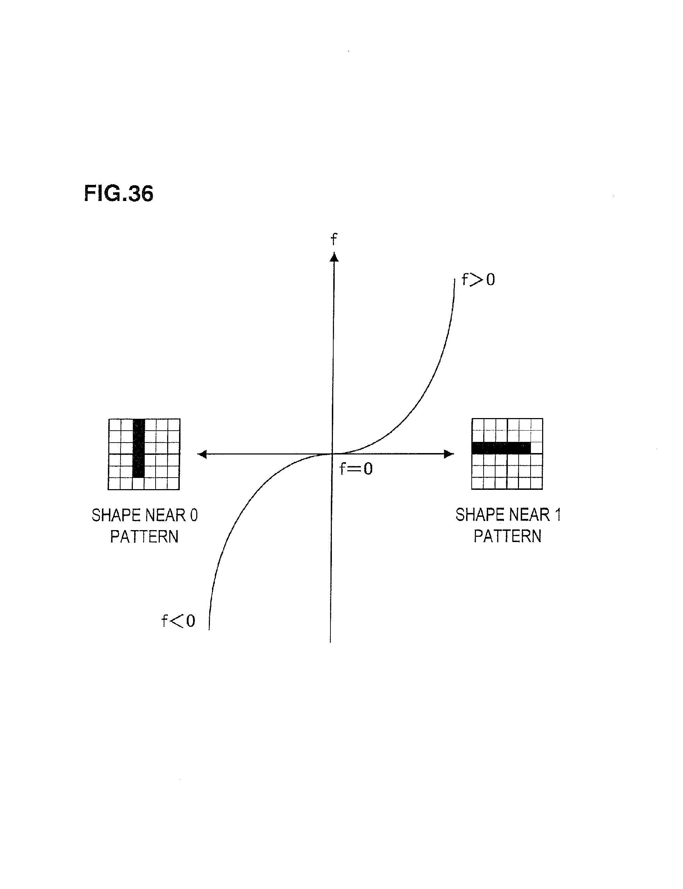

The filter processing is carried out by moving the filer processing mask so as to generate a set of outputs f of this filter processing, that is, a filter output result of executing the scanning shown in FIG. 31 in the order of raster scanning. The output characteristic of the filter is as shown in FIG. 36 and 1/0 of information can be determined by positive or negative of the filter output value.

In case of executing the filter processing by moving the filter processing mask, the filter processing mask sometimes coincides with the signal unit or sometimes deflects from the signal unit. Because the filter output value indicates a highest value when the filter processing mask coincides with the signal unit and the output value drops as it deflects from the signal unit, the signal position can be synchronized by searching for a peak value. This processing is substantially the same as the first embodiment.

(Effect of the second embodiment)

According to this embodiment, following effects can be obtained as described above.

(2-1) The processing amount is small.
(2-2) Because the pattern is small, a high density can be attained.
(2-3) Others than the dot pattern are accepted.

(Third embodiment)

This embodiment will explain an application example of the filter.

(1) Application example 1

If the high frequency component of an edge is changed to dull by scanning a printed material or the high frequency component is dulled due to blur of black toner upon printing, the expression (1) deteriorates the detection ratio so that the edge cannot be detected well. In this case, the filter processing mask of 4 × 4 as shown in FIG. 30 is used and the expression (1) is expanded as the expression (2) indicates in order to succeed to detect the edge both when the high frequency component is dulled or not dulled.

[Expression 7]

$$f = \sum_{i=0}^{3} \left( \left( P_{i,0} - \min\left( P_{i,1}, P_{i,2} \right) \right) \times \left( P_{i,3} - \min\left( P_{i,1}, P_{i,2} \right) \right) \right) - \sum_{j=0}^{3} \left( \left( P_{0,j} - \min\left( P_{1,j}, P_{2,j} \right) \right) \times \left( P_{3,j} - \min\left( P_{1,j}, P_{2,j} \right) \right) \right)$$

where,

$$\min(a,b) = \begin{cases} a & (a \le b) \\ b & (a > b) \end{cases}$$

$$\cdot \ \cdot \ \cdot \ (2)$$

The output characteristic of this filter is as shown in FIG. 36. This output result can be processed in the same way as the first embodiment. The application example 1 enables signal detection even if the edge is dulled or the resolution drops because of print/ scanning.

(2) Application example 2

Because the expressions (1) and (2) react with a pattern having the same frequency and an inverse phase (inversion of white/black), they react with pseudo white edge between black patterns so as to affect the signal detection ratio badly. To suppress the reaction to this inverse phase, the expression can be modified as indicated by the following expression (3) using inverse phase reaction suppressing means (g(x)). This example indicates a case where a 4 $\times$ 4 filter processing mask shown in FIG. 30 is used.

[Expression 8]

$$f = \sum_{i=0}^{3} \left\{ g\!\left(P_{i,0} - \min\!\left(P_{i,1}, P_{i,2}\right)\right) \times g\!\left(P_{i,3} - \min\!\left(P_{i,1}, P_{i,2}\right)\right) \right\} - \sum_{j=0}^{3} \left\{ g\!\left(P_{0,j} - \min\!\left(P_{1,j}, P_{2,j}\right)\right) \times g\!\left(P_{3,j} - \min\!\left(P_{1,j}, P_{2,j}\right)\right) \right\}$$

where,

$$g(x) = \begin{cases} x & (x > 0) \\ 0 & (x \le 0) \end{cases}$$

$$\cdot \ \cdot \ \cdot \ (3)$$

This output result can be processed in the same way as the first embodiment. Because the application example 2 blocks reaction to an inverse phase signal, the signal detection accuracy is improved.

(3) Application example 3

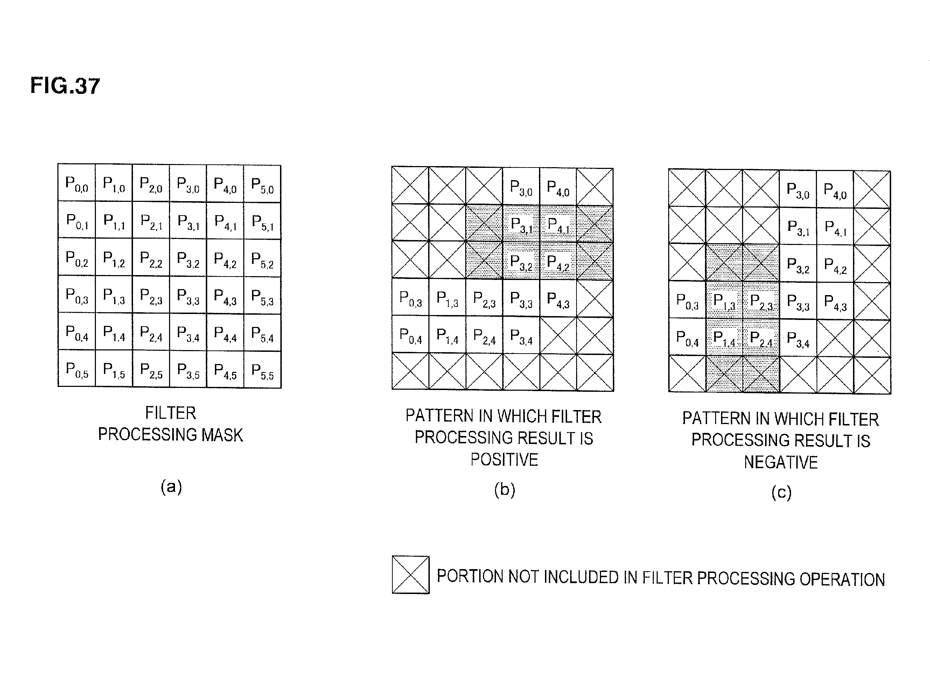

Because edge detection is carried out by referring to pixels around a 4 $\times$ 4 pattern when using a pattern which is coupled with an adjacent pattern as shown in FIG. 28, the filter processing mask as shown in FIG. 37 is used. In case of the filter processing mask of FIG. 37(a), for example, FIG. 37(b) indicates a pattern in which the filter output is positive and FIG. 37(c) indicates a pattern in which the filter output is negative. Filter arithmetic operation is carried out as indicated in the following expression (4).

[Expression 9]

$$f = \sum_{i=3}^{4} \left\{ g\!\left(P_{i,0} - \min\!\left(P_{i,1}, P_{i,2}\right)\right) \times g\!\left(P_{i,3} - \min\!\left(P_{i,1}, P_{i,2}\right)\right) \right\} - \sum_{j=3}^{4} \left\{ g\!\left(P_{0,j} - \min\!\left(P_{1,j}, P_{2,j}\right)\right) \times g\!\left(P_{3,j} - \min\!\left(P_{1,j}, P_{2,j}\right)\right) \right\}$$

$$\cdot \ \cdot \ \cdot \ (4)$$

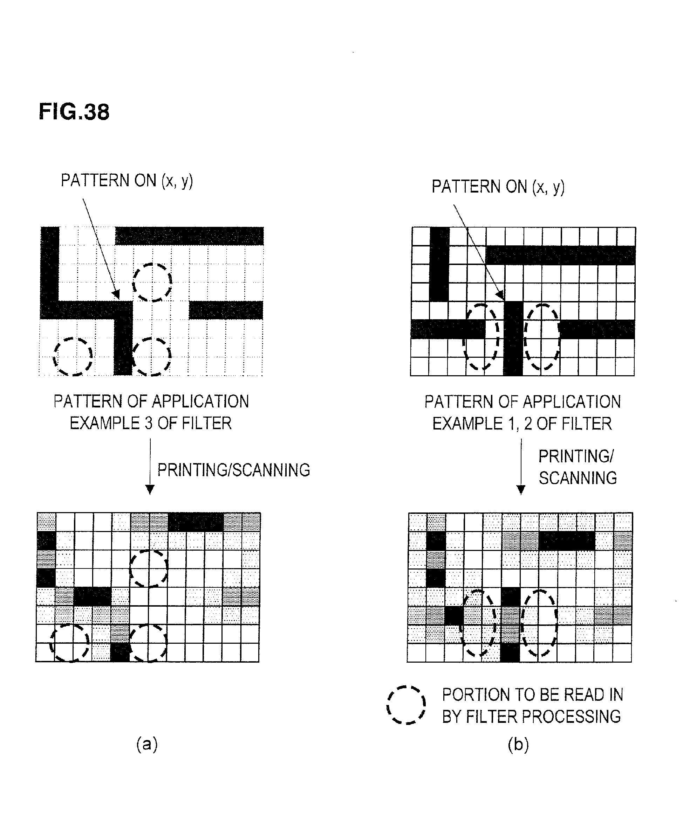

The output characteristic of this filter is as shown in FIG. 36. The same processing as the first embodiment can be carried out using this output result. Because the application example 3 enables the interval of the dot pattern constituting the signal pattern to be expanded with a pattern expressing a signal as shown in FIG. 38(a), the waveform is less dulled as a result of printing/ scanning as compared with the application examples 1, 2 shown in FIG. 38(b), thereby improving the signal detection accuracy.

Although the preferred embodiments of the watermark information embedding apparatus, the watermark information detecting apparatus, the watermark information embedding method, watermark information detecting method and printed material have been described with reference to the accompanying drawings, the present invention is not restricted to such examples. It is evident that those skilled in art can reach various modifications or corrections within the scope of technical philosophy described in the scope of claim of the present invention and it is understood that naturally those belong to the technical range of the present invention.

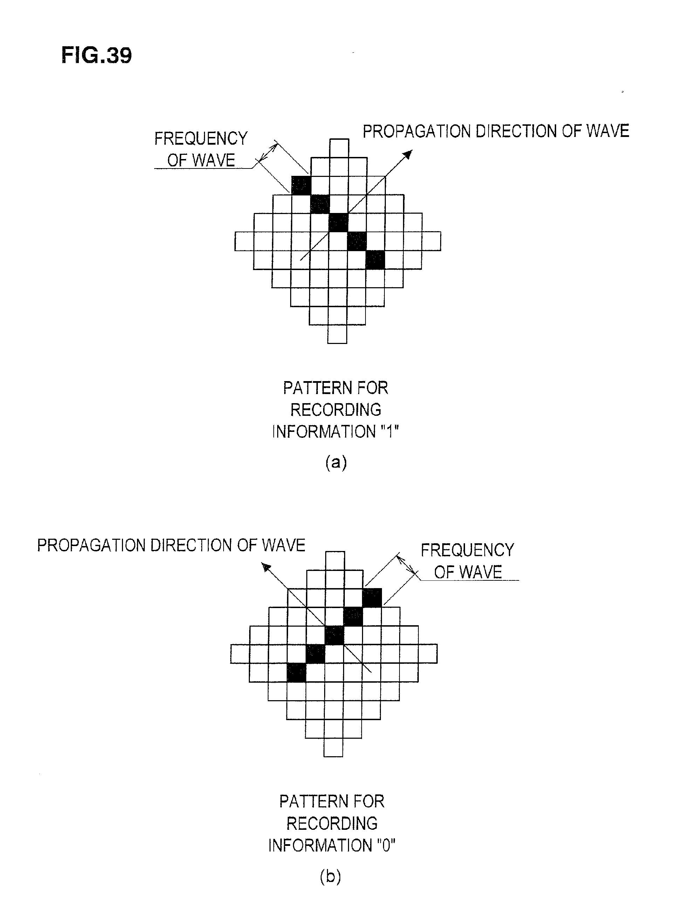

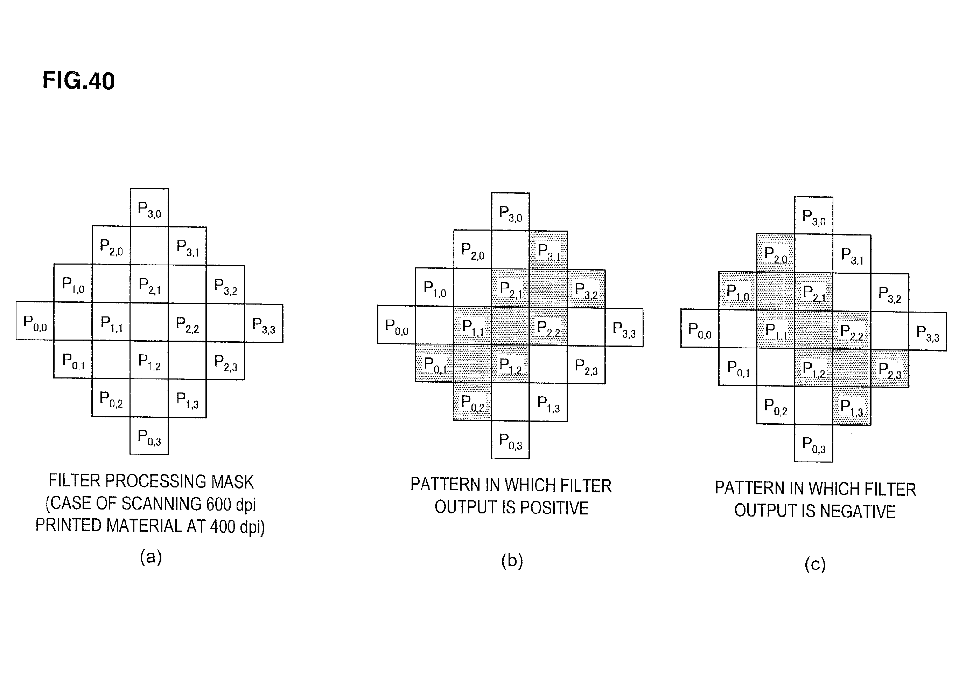

The filter processing may adopt a 45-degree oblique line (shape of "/" or "\") pattern as indicated in FIG. 39 if the major components of the frequency components are perpendicular as well as horizontal/vertical patterns. In the meantime, in FIG. 39, (a) indicates a pattern for recording information "1" and (b) indicates a pattern for recording information "0". At this time, to detect a pattern shown in FIG. 39, a filter processing mask shown in FIG. 40 is used. In case of the filter processing mask of FIG. 40(a), for example, FIG. 40(b) indicates a pattern in which the filter output is positive and FIG. 40(c) indicates a pattern in which the filter output is negative. The pattern of FIG. 39 and the filter processing mask of FIG. 40 can use an expression of the filer of the second embodiment.

Although in the above described embodiment, a case of inputting the inputted image data 15 directly into the watermark image embedding portion 13 has been described, the present invention is not restricted to this. For example, it is permissible to provide an imaging portion (imaging means) for imaging the image data 15 so as to input an imaged image into the watermark image synthesizing portion 13.

[Industrial Applicability]

The present invention can be applied to the watermark information embedding apparatus/method for embedding information in image according to electronic watermark technology and watermark information detecting apparatus/method for detecting information embedded in an image according to the electronic watermark technology and printed material.

**Claims**

1. A watermark information embedding apparatus for embedding information into an image by electronic watermark technology comprising:

   a coding portion for coding embedding information to be embedded into an image;
   a pattern allocating portion for allocating a pattern to each symbol of the coded embedding information; and
   a disposing portion for disposing the pattern corresponding to the embedding information on the image regularly, wherein one or more patterns having a predetermined spatial frequency are allocated to each symbol.

2. The watermark information embedding apparatus according to claim 1 wherein the pattern is a pattern composed of plural pixels having a specific frequency and direction.

3. The watermark information embedding apparatus according to claim 1 wherein the pattern specifies a corresponding symbol by a direction in which the frequency component is strong.

4. The watermark information embedding apparatus according to claim 1 wherein the pattern has an edge component having frequencies perpendicular to each other and specifies a corresponding symbol by a direction of an edge component in which the frequency is strong.

5. The watermark information embedding apparatus according to claim 4 wherein the pattern has horizontal and vertical edge components having a specific frequency and specifies a corresponding symbol by the direction of an edge component in which the frequency is strong.

6. The watermark information embedding apparatus according to claim 1 wherein two or more patterns having a near frequency and direction are allocated to each symbol.

7. The watermark information embedding apparatus according to claim 1 wherein the disposing portion compares a pixel on an image with a pixel of a pattern in the terms of pixel unit when the pattern is disposed and changes over whether or not the pattern is disposed in the terms of pixel unit.

8. The watermark information embedding apparatus according to claim 7 wherein the comparison is carried out with the value of pixel.

9. The watermark information embedding apparatus according to claim 7 wherein the comparison is carried out by determining whether the pixel on the image is a pixel constituting the foreground or a pixel constituting the background and whether a pixel of the pattern is a pixel constituting the foreground or a pixel constituting the background.

10. The watermark information embedding apparatus according to claim 8 wherein the disposing portion disposes a pattern only when the pixel on the image is a pixel constituting the background.

11. The watermark information embedding apparatus according to claim 1 wherein the pattern is a pattern keeping contact with an adjacent pattern.

12. The watermark information embedding apparatus according to claim 1 further comprising an imaging portion for converting arbitrary data to the image.

13. The watermark information embedding apparatus according to claim 1 further comprising a printing portion for printing an image in which the embedding information is embedded in a printable medium.

14. A watermark information detecting apparatus for detecting an embedding information embedded in an image by electronic watermark technology, comprising a detecting portion for detecting a pattern corresponding to the embedding information, wherein
the pattern is a pattern disposed in the image by the watermark information embedding apparatus according to claim 1.

15. The watermark information detecting apparatus according to claim 14 wherein the pattern is a pattern deteriorated more than when it is embedded.

16. The watermark information detecting apparatus according to claim 14 wherein the detecting portion determines a symbol corresponding to the pattern from a detected pattern and restores the embedding information by connecting the symbol.

17. The watermark information detecting apparatus according to claim 14 wherein the detecting portion carries out filter processing to a minute region in an image by scanning a region larger than the minute region in the image.

18. The watermark information detecting apparatus according to claim 17 wherein a peak value of the filter output value is searched for by the unit in which a pattern is recorded from a scanned filter processing result so as to specify a pattern position.

19. The watermark information detecting apparatus according to claim 14 wherein the detecting portion specifies a pattern depending on whether the output value of the filter is positive or negative.

20. The watermark information detecting apparatus according to claim 14 wherein the detecting portion uses a filter for reducing a reaction to a pattern of an opposite phase.

21. The watermark information detecting apparatus according to claim 14 wherein the detecting portion uses a filter capable of detecting a signal properly even if the frequency of a pattern drops.

22. The watermark information detecting apparatus according to claim 21 wherein the detecting portion uses a filter using the maximum value or minimum value of the density, luminance, saturation or chromaticity of a pixel in a specific surrounding range as part of a sample value upon detection of an edge.

23. A watermark information embedding method for embedding information in an image by electronic watermark technology, comprising:

coding step of coding embedding information to be embedded into an image;
a pattern allocating step of allocating a pattern to each symbol of the coded embedding information; and
a disposing step of disposing the pattern corresponding to the embedding information in the image regularly,
wherein one or more patterns having a predetermined spatial frequency are allocated to each symbol.

**24.** The watermark information embedding method according to claim 23 wherein the pattern is a pattern composed of plural pixels having a specific frequency and direction.

**25.** The watermark information embedding method according to claim 23 wherein the pattern specifies a corresponding symbol by a direction in which the frequency component is strong.

**26.** The watermark information embedding method according to claim 23 wherein the pattern has an edge component having frequencies perpendicular to each other and specifies a corresponding symbol by a direction of an edge component in which the frequency is strong.

**27.** The watermark information embedding method according to claim 26 wherein the pattern has horizontal and vertical edge components having a specific frequency and specifies a corresponding symbol by the direction of an edge component in which the frequency is strong.

**28.** The watermark information embedding method according to claim 23 wherein two or more patterns having a near frequency and direction are allocated to each symbol.

**29.** The watermark information embedding method according to claim 23 wherein the disposing step compares a pixel on an image with a pixel of a pattern in the terms of pixel unit when the pattern is disposed and changes over whether or not the pattern is disposed in the terms of pixel unit.

**30.** The watermark information embedding method according to claim 29 wherein the comparison is carried out with the value of pixel.

**31.** The watermark information embedding method according to claim 29 wherein the comparison is carried out by determining whether the pixel on the image is a pixel constituting the foreground or a pixel constituting the background and whether a pixel of the pattern is a pixel constituting the foreground or a pixel constituting the background.

**32.** The watermark information embedding method according to claim 30 wherein the disposing step disposes a pattern only when the pixel on the image is a pixel constituting the background.

**33.** The watermark information embedding apparatus according to claim 23 wherein the pattern is a pattern keeping contact with an adjacent pattern.

**34.** The watermark information embedding method according to claim 23 further comprising an imaging step of converting arbitrary data to the image.

**35.** The watermark information embedding method according to claim 23 further comprising a printing step of printing an image in which the embedding information is embedded in a printable medium.

**36.** A watermark information detecting method for detecting an embedding information embedded in an image by electronic watermark technology, comprising a detecting step of detecting a pattern disposed in the image and corresponding to the embedding information, wherein
the pattern is a pattern disposed in the image by the watermark information embedding method according to claim 23.

**37.** The watermark information detecting method according to claim 36 wherein the pattern is a pattern deteriorated more than when it is embedded.

**38.** The watermark information detecting method according to claim 36 wherein the detecting step determines a symbol corresponding to the pattern from a detected pattern and restores the embedding information by connecting the symbol.

**39.** The watermark information detecting method according to claim 36 wherein the detecting step carries out filter processing to a minute region in an image by scanning a region larger than the minute region in the image.

**40.** The watermark information detecting method according to claim 39 wherein a peak value of the filter output value is searched for by the unit in which a pattern is recorded from a scanned filter processing result so as to specify a pattern position.

**41.** The watermark information detecting method according to claim 36 wherein the detecting step specifies a pattern depending on whether the output value of the filter is positive or negative.

**42.** The watermark information detecting method according to claim 36 wherein the detecting step uses a filter for reducing a reaction to a pattern of an opposite phase.

**43.** The watermark information detecting method according to claim 36 wherein the detecting step uses a filter capable of detecting a signal properly even if the frequency of a pattern drops.

**44.** The watermark information detecting method according to claim 43 wherein the detecting step uses a filter using the maximum value or minimum value of the density, luminance, saturation or chromaticity of a pixel in a specific surrounding range as part of a sample value upon detection of an edge.

**45.** A printed material outputted with information embedded in an image by electronic watermark technology, wherein one or more patterns having a predetermined spatial frequency allocated to each symbol are allocated to the symbol that codes the embedding information to be embedded into an image and the pattern corresponding to the embedding information is disposed in the image regularly.

**46.** The printed material according to claim 45 wherein the pattern is a pattern composed of plural pixels having a specific frequency and direction.

**47.** The printed material method according to claim 45 wherein the pattern specifies a corresponding symbol by a direction in which the frequency component is strong.

**48.** The printed material according to claim 45 wherein the pattern has an edge component having frequencies perpendicular to each other and specifies a corresponding symbol by a direction of an edge component in which the frequency is strong.

**49.** The printed material according to claim 48 wherein the pattern has horizontal and vertical edge components having a specific frequency and specifies a corresponding symbol by the direction of an edge component in which the frequency is strong.

**50.** The printed material according to claim 45 wherein two or more patterns having a near frequency and direction are allocated to each symbol.

**51.** The printed material according to claim 45 wherein a pixel on an image is compared with a pixel of a pattern in the terms of pixel unit when the pattern is disposed and whether or not the pattern is disposed is changed over in the terms of pixel unit.

**52.** The printed material according to claim 51 wherein the comparison is carried out with the value of pixel.

**53.** The printed material according to claim 51 wherein the comparison is carried out by determining whether the pixel on the image is a pixel constituting the foreground or a pixel constituting the background and whether a pixel of the pattern is a pixel constituting the foreground or a pixel constituting the background.

**54.** The printed material according to claim 52 wherein a pattern is disposed only when the pixel on the image is a pixel constituting the background.

**55.** The printed material according to claim 45 wherein the pattern is a pattern keeping contact with an adjacent pattern.

# FIG.1

```
   ╭─────────────╮              ╭──────────────────────╮
   │ IMAGE DATA  │~15           │ EMBEDDING INFORMATION │~16
   ╰─────────────╯              ╰──────────────────────╯
       │                                   │
       │                                   ▼
       │                         ┌──────────────────┐
       │                         │  CODING PORTION   │~11
       │                         └──────────────────┘
       │                                   │
       │                                   ▼
       │                         ┌──────────────────┐
       │                         │ PATTERN ALLOCATING │~12
       │                         │     PORTION        │
       │                         └──────────────────┘
       │                                   │
       ▼                                   │
   ┌─────────────────────┐                 │
   │ WATERMARK EMBEDDED  │◄────────────────┘
   │ IMAGE SYNTHESIZING  │~13                          ~10
   │     PORTION         │
   └─────────────────────┘
            │
            ▼
   ┌─────────────────────┐
   │   OUTPUT DEVICE     │~14
   └─────────────────────┘
            │
            ▼
   ┌─────────────────────────┐
   │ PRINTED MATERIAL (PAPER, │~20
   │  CARD AND THE LIKE)      │
   └─────────────────────────┘
            │
            ▼
   ┌─────────────────────┐
   │   INPUT DEVICE      │~31
   └─────────────────────┘
            │
            ▼
   ┌─────────────────────┐
   │ WATERMARK DETECTING │~32                          ~30
   │     PORTION         │
   └─────────────────────┘
```

# FIG.2

```
                    ┌─────────────┐
                    │    START    │
                    └──────┬──────┘
                           │
                           ▼
              ┌──────────────────────┐
              │   INPUT IMAGE AND     │ ～S101
              │ EMBEDDING INFORMATION │
              └───────────┬───────────┘
                          │
                          ▼
              ┌──────────────────────┐
              │    CODE EMBEDDING     │ ～S102
              │     INFORMATION       │
              └───────────┬───────────┘
                          │
                          ▼
              ┌──────────────────────┐
              │ ALLOCATE SIGNAL UNIT TO │ ～S103
              │     EACH SYMBOL       │
              └───────────┬───────────┘
                          │
                          ▼
              ┌──────────────────────┐
              │ SYNTHESIZE WATERMARK  │ ～S104
              │        IMAGE          │
              └───────────┬───────────┘
                          │
                          ▼
              ┌──────────────────────┐
              │     OUTPUT PRINT      │ ～S105
              └───────────┬───────────┘
                          │
                          ▼
                    ┌─────────────┐
                    │     END     │
                    └─────────────┘
```

# FIG.3

Sw = 12 pixels

DIRECTION IN WHICH DOTS ARE ARRANGED DENSELY

Sh = 12 pixels

PROPAGATION DIRECTION OF WAVE

DOT

1 wavelength

(1) UNIT A

PROPAGATION DIRECTION OF WAVE

(2) UNIT B

# FIG.4

SIGNAL UNIT WIDTH WITH REFERENCE TO PROPAGATION DIRECTION OF WAVE

BELLEY OF MINIMUM VALUE

BELLEY OF MAXIMUM VALUE

A CYCLE

**FIG.5**

PROPAGATION DIRECTION OF WAVE

(3) UNIT C

PROPAGATION DIRECTION OF WAVE

(4) UNIT D

PROPAGATION DIRECTION OF WAVE

(5) UNIT E

# FIG.6

UNIT E

(1)

UNIT A

(2)

UNIT B

(3)

# FIG.7

UNIT A
(SYMBOL 0)

UNIT B
(SYMBOL 1)

UNIT E
(NO SYMBOL)

UNIT PATTERN

(1)

UNIT A (SYMBOL 0)

UNIT B (SYMBOL 1)

UNIT E (NO SYMBOL)

UNIT PATTERN

(2)

UNIT PATTERN

UNIT PATTERN
INDICATING SYMBOL 0

UNIT PATTERN
INDICATING SYMBOL 1

(3)

# FIG.8

```
         ┌─────────────┐
         │    START    │
         └──────┬──────┘
                │
                ▼
     ┌─────────────────────┐
     │     CODE DATA       │ ~ S201
     └──────────┬──────────┘
                │
                ▼
     ┌─────────────────────┐
     │ CALCULATE THE QUANTITY │ ~ S202
     │ OF INFORMATION REPETITION │
     └──────────┬──────────┘
                │
                ▼
     ┌─────────────────────┐
     │ EMBED CODE LENGTH DATA │ ~ S203
     └──────────┬──────────┘
                │
                ▼
     ┌─────────────────────┐
     │   EMBED DATA CODE   │ ~ S204
     └──────────┬──────────┘
                │
                ▼
         ┌─────────────┐
         │     END     │
         └─────────────┘
```

# FIG.9

UNIT PATTERN IN WHICH BIT STRING INDICATING CODE LENGTH IS EMBEDDED

UNIT PATTERN

| 0 | 1 | 2 | 3 | 4 | 5 | 6 | 7 | 8 |
|---|---|---|---|---|---|---|---|---|
| 9 | 10 | 11 | | | | | | |

| | | | 0 | 1 | 2 | 3 | 4 | 5 |
|---|---|---|---|---|---|---|---|---|
| 6 | 7 | 8 | 9 | 10 | 11 | | | |

| | | | | | | 0 | 1 | 2 |
|---|---|---|---|---|---|---|---|---|
| 3 | 4 | 5 | 6 | 7 | 8 | 9 | 10 | 11 |

| 0 | 1 | 2 | 3 | 4 | 5 | 6 | 7 | 8 |
|---|---|---|---|---|---|---|---|---|
| 9 | 10 | 11 | | | | | | |

| | | | 0 | 1 | 2 | 3 | 4 | 5 |
|---|---|---|---|---|---|---|---|---|
| 6 | 7 | 8 | 9 | 10 | 11 | | | |

| | | | | | | 0 | 1 | 2 |
|---|---|---|---|---|---|---|---|---|
| 3 | 4 | 5 | 6 | 7 | 8 | 9 | 10 | 11 |

| 0 | 1 | 2 | 3 | 4 | 5 | 6 | 7 | 8 |
|---|---|---|---|---|---|---|---|---|
| 9 | 10 | 11 | | | | | | |

| | | | 0 | 1 | 2 | 3 | 4 | 5 |
|---|---|---|---|---|---|---|---|---|

UNIT PATTERN MATRIX

DATA CODE UNIT    CODE LENGTH REGION

WATERMARK IMAGE IN WHICH CLASSIFIED INFORMATION IS EMBEDDED REPEATEDLY

INFORMATION REGION

| 0 | 1 | 2 | 3 | 4 | 5 | 6 | 7 | 8 |
|---|---|---|---|---|---|---|---|---|
| 9 | 10 | 11 | 0 | 1 | 2 | 3 | 4 | 5 |
| 6 | 7 | 8 | 9 | 10 | 11 | 0 | 1 | 2 |
| 3 | 4 | 5 | 6 | 7 | 8 | 9 | 10 | 11 |
| 0 | 1 | 2 | 3 | 4 | 5 | 6 | 7 | 8 |
| 9 | 10 | 11 | 0 | 1 | 2 | 3 | 4 | 5 |
| 6 | 7 | 8 | 9 | 10 | 11 | 0 | 1 | 2 |
| 3 | 4 | 5 | 6 | 7 | 8 | 9 | 10 | 11 |
| 0 | 1 | 2 | 3 | 4 | 5 | 6 | 7 | 8 |
| 9 | 10 | 11 | 0 | 1 | 2 | 3 | 4 | 5 |

# FIG.10

| SIGNAL UNIT COLOR | COLOR ON INPUT IMAGE | COLOR ON SYNTHESIZED IMAGE |
|---|---|---|
| FOREGROUND COLOR | FOREGROUND COLOR | FOREGROUND COLOR OF INPUT IMAGE |
| FOREGROUND COLOR | BACKGROUND COLOR | FOREGROUND COLOR OF SIGNAL UNIT |
| BACKGROUND COLOR | FOREGROUND COLOR | FOREGROUND COLOR OF INPUT IMAGE |
| BACKGROUND COLOR | BACKGROUND COLOR | BACKGROUND COLOR OF INPUT IMAGE |

# FIG.11

| DOCUMENT IMAGE | | WATERMARK IMAGE |
|---|---|---|
| すかし入り文書画像の例<br>すかし入り文書画像の例<br>すかし入り文書画像の例<br>すかし入り文書画像の例<br>すかし入り文書画像の例<br>すかし入り文書画像の例<br>すかし入り文書画像の例<br>すかし入り文書画像の例 | ⊗ | |

WATERMARK EMBEDDED DOCUMENT IMAGE

すかし入り文書画像の例
すかし入り文書画像の例
すかし入り文書画像の例
すかし入り文書画像の例
すかし入り文書画像の例
すかし入り文書画像の例
すかし入り文書画像の例
すかし入り文書画像の例

⊗ AND OPERATION

**FIG.12**

DOCUMENT
IMAGE

WATERMARK
IMAGE

WATERMARK EMBEDDED DOCUMENT IMAGE

# FIG.13

```
         ┌──────────────┐
         │    START     │
         └──────┬───────┘
                │
                ▼
   ┌────────────────────────┐
   │  INPUT PRINTED MATERIAL │──S301
   └────────────┬───────────┘
                │
                ▼
   ┌────────────────────────┐
   │  CALCULATE QUANTITY OF  │──S302
   │   EMBEDDED SIGNALS      │
   └────────────┬───────────┘
                │
                ▼
   ┌────────────────────────┐
   │  SET SIGNAL DETECTION   │──S303
   │     COORDINATES         │
   └────────────┬───────────┘
                │
                ▼
   ┌────────────────────────┐
   │      DETECT SIGNAL      │──S304
   └────────────┬───────────┘
                │
                ▼
   ┌────────────────────────┐
   │   DECODE INFORMATION    │──S305
   └────────────┬───────────┘
                │
                ▼
         ┌──────────────┐
         │     END      │
         └──────────────┘
```

## FIG.14

すかし入り文書画像の例

すかし入り文書画像の例

すかし入り文書画像の例

すかし入り文書画像の例

すかし入り文書画像の例

すかし入り文書画像の例

すかし入り文書画像の例

すかし入り文書画像の例

INPUT IMAGE
(1)

UNIT PATTERN

すかし入り文書画像の例

すかし入り文書画像の例

すかし入り文書画像の例

すかし入り文書画像の例

すかし入り文書画像の例

すかし入り文書画像の例

すかし入り文書画像の例

すかし入り文書画像の例

AFTER SETTING COORDINATE
(2)

# FIG.15

# FIG.16

SIGNAL UNIT WIDTH WITH REFERENCE TO PROPAGATION DIRECTION OF WAVE

MAX

BELLEY OF MINIMUM VALUE

MIN

BELLEY OF MAXIMUM VALUE

A CYCLE

# FIG.17

FILTER A
(ACTUAL NUMBER FILTER AND
IMAGINARY NUMBER FILTER)

SET MAXIMUM VALUE OF F(A) AS OUTPUT VALUE Fu (A, x, y) TO THIS UNIT PATTERN

UNIT PATTERN U (x, y)

CALCULATE CONVOLUTION BY SLIDING IN HORIZONTAL DIRECTION AND VERTICAL DIRECTION

COMPARE Fu (A, x, y) WITH Fu (B, x, y) AND DETERMINE THAT A LARGER SIGNAL IS EMBEDDED

FILTER B
(ACTUAL NUMBER FILTER AND
IMAGINARY NUMBER FILTER)

SET MAXIMUM OF F(B) AS OUTPUT VALUE Fu (B, x, y) TO THIS UNIT PATTERN

UNIT PATTERN U (x, y)

CALCULATE CONVOLUTION BY SLIDING IN HORIZONTAL DIRECTION AND VERTICAL DIRECTION

## FIG.18

| 0 | 1 | 0 | 1 | 0 | 1 | 0 | 1 | 0 |
|---|---|---|---|---|---|---|---|---|
| 0 | 1 | 0 | 1 | 0 | 1 | 0 | 1 | 0 |
| 0 | 1 | 0 | 1 | 0 | 1 | 0 | 1 | 0 |
| 0 | 1 | 0 | 1 | 0 | 1 | 0 | 1 | 0 |
| 0 | 1 | 0 | 1 | 0 | 1 | 0 | 1 | 0 |
| 0 | 1 | 0 | 1 | 0 | 1 | 0 | 1 | 0 |
| 0 | 1 | 0 | 1 | 0 | 1 | 0 | 1 | 0 |
| 0 | 1 | 0 | 1 | 0 | 1 | 0 | 1 | 0 |
| 0 | 1 | 0 | 1 | 0 | 1 | 0 | 1 | 0 |
| 0 | 1 | 0 | 1 | 0 | 1 | 0 | 1 | 0 |
| 0 | 1 | 0 | 1 | 0 | 1 | 0 | 1 | 0 |

(1) DETECTING SYMBOL

(2) DECODING DATA CODE

010101..........010101

CLASSIFIED INFORMATION

(3) DECODING AND INFORMATION FETCHING OUT

# FIG.19

```
        ┌─────────────┐
        │    START    │
        └─────────────┘
               │
               ▼
   ┌───────────────────────┐
   │  FETCH OUT CODE LENGTH │ ～S401
   │          DATA         │
   └───────────────────────┘
               │
               ▼
   ┌───────────────────────┐
   │  CALCULATE QUANTITY OF │ ～S402
   │ INFORMATION REPETITION │
   └───────────────────────┘
               │
               ▼
   ┌───────────────────────┐
   │  FETCH OUT DATA CODE   │ ～S403
   └───────────────────────┘
               │
               ▼
   ┌───────────────────────┐
   │  RECONSTRUCT DATA CODE │ ～S404
   └───────────────────────┘
               │
               ▼
        ┌─────────────┐
        │     END     │
        └─────────────┘
```

# FIG.20

UNIT PATTERN FETCHED OUT AS BIT STRING EXPRESSING CODE LENGTH

| | | | | | | | | | |
|---|---|---|---|---|---|---|---|---|---|

| 0 | 1 | 2 | 3 | 4 | 5 | 6 | 7 | 8 |
|---|---|---|---|---|---|---|---|---|
| 9 | 10 | 11 | 0 | 1 | 2 | 3 | 4 | 5 |
| 6 | 7 | 8 | 9 | 10 | 11 | 0 | 1 | 2 |
| 3 | 4 | 5 | 6 | 7 | 8 | 9 | 10 | 11 |
| 0 | 1 | 2 | 3 | 4 | 5 | 6 | 7 | 8 |
| 9 | 10 | 11 | 0 | 1 | 2 | 3 | 4 | 5 |
| 6 | 7 | 8 | 9 | 10 | 11 | 0 | 1 | 2 |
| 3 | 4 | 5 | 6 | 7 | 8 | 9 | 10 | 11 |
| 0 | 1 | 2 | 3 | 4 | 5 | 6 | 7 | 8 |
| 9 | 10 | 11 | 0 | 1 | 2 | 3 | 4 | 5 |

UNIT PATTERN MATRIX

| 0 | 1 | 2 | 3 | 4 | 5 | 6 | 7 | 8 |
|---|---|---|---|---|---|---|---|---|
| 9 | 10 | 11 | | | | | | |

| | | | 0 | 1 | 2 | 3 | 4 | 5 |
|---|---|---|---|---|---|---|---|---|

| 6 | 7 | 8 | 9 | 10 | 11 | | | |
|---|---|---|---|---|---|---|---|---|

| | | | | | | 0 | 1 | 2 |
|---|---|---|---|---|---|---|---|---|

| 3 | 4 | 5 | 6 | 7 | 8 | 9 | 10 | 11 |
|---|---|---|---|---|---|---|---|---|

| 0 | 1 | 2 | 3 | 4 | 5 | 6 | 7 | 8 |
|---|---|---|---|---|---|---|---|---|
| 9 | 10 | 11 | | | | | | |

| | | | 0 | 1 | 2 | 3 | 4 | 5 |
|---|---|---|---|---|---|---|---|---|

| 6 | 7 | 8 | 9 | 10 | 11 | | | |
|---|---|---|---|---|---|---|---|---|

| | | | | | | 0 | 1 | 2 |
|---|---|---|---|---|---|---|---|---|

| 3 | 4 | 5 | 6 | 7 | 8 | 9 | 10 | 11 |
|---|---|---|---|---|---|---|---|---|

| 0 | 1 | 2 | 3 | 4 | 5 | 6 | 7 | 8 |
|---|---|---|---|---|---|---|---|---|
| 9 | 10 | 11 | | | | | | |

| | | | 0 | 1 | 2 | 3 | 4 | 5 |
|---|---|---|---|---|---|---|---|---|

FETCHED OUT DATA CODE UNIT

# FIG.21

Du(1,1)  Du(1,2)                                    Du(1,12)

| 0 | 1 | 2 | 3 | 4 | 5 | 6 | 7 | 8 | 9 | 10 | 11 |

⊕

Du(2,1)

| 0 | 1 | 2 | 3 | 4 | 5 | 6 | 7 | 8 | 9 | 10 | 11 |

⊕

| 0 | 1 | 2 | 3 | 4 | 5 | 6 | 7 | 8 | 9 | 10 | 11 |

⊕

| 0 | 1 | 2 | 3 | 4 | 5 | 6 | 7 | 8 | 9 | 10 | 11 |

⊕

| 0 | 1 | 2 | 3 | 4 | 5 | 6 | 7 | 8 | 9 | 10 | 11 |

⊕

| 0 | 1 | 2 | 3 | 4 | 5 | 6 | 7 | 8 | 9 | 10 | 11 |

Du(7,1)

⊕

| 0 | 1 | 2 | 3 | 4 | 5 | 6 | 7 | 8 | 9 | 10 | 11 |

Du(8,1)

⊕

Du(7,12)

| 0 | 1 | 2 | 3 | 4 | 5 |

Du(8,6)

⊕ BIT CERTAINTY FACTOR CALCULATION

⇩

| 0 | 1 | 2 | 3 | 4 | 5 | 6 | 7 | 8 | 9 | 10 | 11 |

BIT STRING RECONSTRUCTED BY
CERTAINTY FACTOR CALCULATION
(DATA CODE)

# FIG.22

PROPAGATION DIRECTION OF WAVE

FREQUENCY OF WAVE

PATTERN FOR
RECORDING
INFORMATION "1"

(a)

FREQUENCY OF WAVE

PROPAGATION
DIRECTION OF
WAVE

PATTERN FOR
RECORDING
INFORMATION "0"

(b)

```
0  1  1  0
1  0  1  1
1  1  0  0
```

INFORMATION TO
BE EMBEDDED

PATTERN TO BE EMBEDDED

(c)

# FIG.23

PROPAGATION
DIRECTION OF
WAVE

FREQUENCY
OF WAVE

PATTERN FOR
RECORDING
INFORMATION "1"

(a)

PATTERN FOR
RECORDING
INFORMATION "0"

(b)

```
0 1 1 0
1 0 1 1
1 1 0 0
```

INFORMATION
TO BE
EMBEDDED

PATTERN TO BE EMBEDDED

(c)

# FIG.24

PROPAGATION DIRECTION OF WAVE

FREQUENCY OF WAVE

PATTERN FOR
RECORDING
INFORMATION "1"

(a)

FREQUENCY OF WAVE

PROPAGATION
DIRECTION OF
WAVE

PATTERN FOR
RECORDING
INFORMATION "0"

(b)

```
0  1  1  0
1  0  1  1
1  1  0  0
```

INFORMATION TO
BE EMBEDDED

PATTERN TO BE EMBEDDED

(c)

# FIG.25

PROPAGATION DIRECTION OF WAVE

FREQUENCY
OF WAVE

PATTERN FOR
RECORDING
INFORMATION "1"

(a)

FREQUENCY OF WAVE

PROPAGATION
DIRECTION OF
WAVE

PATTERN FOR
RECORDING
INFORMATION "0"

(b)

0 1 1 0
1 0 1 1
1 1 0 0

INFORMATION TO
BE EMBEDDED

PATTERN TO BE EMBEDDED

(c)

## FIG.26

PATTERN CHANGE-OVER
INFORMATION
(OR RANDOM NUMBER)

0 1 1 0
1 0 1 1
1 1 0 0

INFORMATION TO
BE EMBEDDED

PATTERN TO BE EMBEDDED

# FIG.27

PROPAGATION DIRECTION OF WAVE

FREQUENCY OF WAVE

PATTERN FOR
RECORDING
INFORMATION "1"

(a)

FREQUENCY OF WAVE

PROPAGATION
DIRECTION OF
WAVE

PATTERN FOR
RECORDING
INFORMATION "0"

(b)

```
0  1  1  0
1  0  1  1
1  1  0  0
```

INFORMATION TO
BE EMBEDDED

PATTERN TO BE EMBEDDED

(c)

# FIG.28

PROPAGATION DIRECTION OF WAVE

FREQUENCY
OF WAVE

PATTERN FOR
RECORDING
INFORMATION "1"

(a)

FREQUENCY OF WAVE

PROPAGATION
DIRECTION OF
WAVE

PATTERN FOR
RECORDING
INFORMATION "0"

(b)

```
0  1  1  0
1  0  1  1
1  1  0  0
```

INFORMATION TO
BE EMBEDDED

PATTERN TO BE EMBEDDED

(c)

## FIG.29

PATTERN TO BE EMBEDDED

PATTERN OBTAINED BY
PRINTING/SCANNING

## FIG.30

| $P_{0,0}$ | $P_{1,0}$ | $P_{2,0}$ | $P_{3,0}$ |
|---|---|---|---|
| $P_{0,1}$ | $P_{1,1}$ | $P_{2,1}$ | $P_{3,1}$ |
| $P_{0,2}$ | $P_{1,2}$ | $P_{2,2}$ | $P_{3,2}$ |
| $P_{0,3}$ | $P_{1,3}$ | $P_{2,3}$ | $P_{3,3}$ |

FILTER
PROCESSING MASK

(a)

| $P_{0,0}$ | $P_{1,0}$ | $P_{2,0}$ | $P_{3,0}$ |
|---|---|---|---|
| $P_{0,1}$ | $P_{1,1}$ | $P_{2,1}$ | $P_{3,1}$ |
| $P_{0,2}$ | $P_{1,2}$ | $P_{2,2}$ | $P_{3,2}$ |
| $P_{0,3}$ | $P_{1,3}$ | $P_{2,3}$ | $P_{3,3}$ |

PATTERN IN WHICH
FILTER OUTPUT IS
POSITIVE

(b)

| $P_{0,0}$ | $P_{1,0}$ | $P_{2,0}$ | $P_{3,0}$ |
|---|---|---|---|
| $P_{0,1}$ | $P_{1,1}$ | $P_{2,1}$ | $P_{3,1}$ |
| $P_{0,2}$ | $P_{1,2}$ | $P_{2,2}$ | $P_{3,2}$ |
| $P_{0,3}$ | $P_{1,3}$ | $P_{2,3}$ | $P_{3,3}$ |

PATTERN IN WHICH
FILTER OUTPUT IS
NEGATIVE

(c)

## FIG.31

# FIG.32

PROPAGATION DIRECTION OF WAVE

FREQUENCY OF WAVE

FREQUENCY OF WAVE

PROPAGATION DIRECTION OF WAVE

PATTERN FOR
RECORDING
INFORMATION "1"

(a)

PATTERN FOR
RECORDING
INFORMATION "0"

(b)

# FIG.33

PROPAGATION DIRECTION OF WAVE

FREQUENCY OF WAVE

FREQUENCY OF WAVE

PROPAGATION DIRECTION OF WAVE

PATTERN FOR
RECORDING
INFORMATION "1"

(a)

PATTERN FOR
RECORDING
INFORMATION "0"

(b)

**FIG.34**

PROPAGATION DIRECTION OF WAVE

FREQUENCY
OF WAVE

PATTERN FOR
RECORDING
INFORMATION "1"

(a)

FREQUENCY OF WAVE

PROPAGATION
DIRECTION OF
WAVE

PATTERN FOR
RECORDING
INFORMATION "0"

(b)

**FIG.35**

| $P_{0,0}$ | $P_{1,0}$ | $P_{2,0}$ |
| $P_{0,1}$ | $P_{1,1}$ | $P_{2,1}$ |
| $P_{0,2}$ | $P_{1,2}$ | $P_{2,2}$ |

FILTER
PROCESSING MASK

(a)

| $P_{0,0}$ | $P_{1,0}$ | $P_{2,0}$ |
| $P_{0,1}$ | $P_{1,1}$ | $P_{2,1}$ |
| $P_{0,2}$ | $P_{1,2}$ | $P_{2,2}$ |

PATTERN IN WHICH
FILTER OUTPUT IS
POSITIVE

(b)

| $P_{0,0}$ | $P_{1,0}$ | $P_{2,0}$ |
| $P_{0,1}$ | $P_{1,1}$ | $P_{2,1}$ |
| $P_{0,2}$ | $P_{1,2}$ | $P_{2,2}$ |

PATTERN IN WHICH
FILTER OUTPUT IS
NEGATIVE

(c)

# FIG.36

f > 0

f

f = 0

f < 0

SHAPE NEAR 0
PATTERN

SHAPE NEAR 1
PATTERN

FIG.37

| P_{0,0} | P_{1,0} | P_{2,0} | P_{3,0} | P_{4,0} | P_{5,0} |
|---|---|---|---|---|---|
| P_{0,1} | P_{1,1} | P_{2,1} | P_{3,1} | P_{4,1} | P_{5,1} |
| P_{0,2} | P_{1,2} | P_{2,2} | P_{3,2} | P_{4,2} | P_{5,2} |
| P_{0,3} | P_{1,3} | P_{2,3} | P_{3,3} | P_{4,3} | P_{5,3} |
| P_{0,4} | P_{1,4} | P_{2,4} | P_{3,4} | P_{4,4} | P_{5,4} |
| P_{0,5} | P_{1,5} | P_{2,5} | P_{3,5} | P_{4,5} | P_{5,5} |

FILTER
PROCESSING MASK

(a)

PATTERN IN WHICH FILTER
PROCESSING RESULT IS
POSITIVE

(b)

PATTERN IN WHICH FILTER
PROCESSING RESULT IS
NEGATIVE

(c)

☒ PORTION NOT INCLUDED IN FILTER PROCESSING OPERATION

EP 1 684 496 A1

# FIG.38

PATTERN ON (x, y)

PATTERN OF APPLICATION
EXAMPLE 3 OF FILTER

PRINTING/SCANNING

(a)

PATTERN ON (x, y)

PATTERN OF APPLICATION
EXAMPLE 1, 2 OF FILTER

PRINTING/
SCANNING

PORTION TO BE READ IN
BY FILTER PROCESSING

(b)

# FIG.39

FREQUENCY
OF WAVE

PROPAGATION DIRECTION OF WAVE

PATTERN FOR
RECORDING
INFORMATION "1"

(a)

PROPAGATION DIRECTION OF WAVE

FREQUENCY
OF WAVE

PATTERN FOR
RECORDING
INFORMATION "0"

(b)

**FIG.40**

(a) FILTER PROCESSING MASK (CASE OF SCANNING 600 dpi PRINTED MATERIAL AT 400 dpi)

(b) PATTERN IN WHICH FILTER OUTPUT IS POSITIVE

(c) PATTERN IN WHICH FILTER OUTPUT IS NEGATIVE

## INTERNATIONAL SEARCH REPORT

| | International application No. |
|---|---|
| | PCT/JP2004/016300 |

A. CLASSIFICATION OF SUBJECT MATTER
  Int.Cl⁷ H04N1/387

According to International Patent Classification (IPC) or to both national classification and IPC

B. FIELDS SEARCHED

Minimum documentation searched (classification system followed by classification symbols)
  Int.Cl⁷ H04N1/387

Documentation searched other than minimum documentation to the extent that such documents are included in the fields searched
  Jitsuyo Shinan Koho       1922-1996   Toroku Jitsuyo Shinan Koho    1994-2004
  Kokai Jitsuyo Shinan Koho  1971-2004   Jitsuyo Shinan Toroku Koho    1996-2004

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2003-209676 A (Oki Electric Industry Co., | 1-3,14-25, |
|   | Ltd.), | 36-47 |
| Y | 25 July, 2003 (25.07.03), | 4-13,26-35, |
|   | Par Nos. [0026] to [0092]; Figs. 1 to 19 | 48-55 |
|   | (Family: none) | |
| | | |
| X | JP 2003-101762 A (Oki Electric Industry Co., | 1-3,14-25, |
|   | Ltd.), | 36-47 |
| Y | 04 April, 2003 (04.04.03), | 4-13,26-35, |
|   | Par Nos. [0030] to [0109]; Figs. 1 to 20 | 48-55 |
|   | & US 2003/0021442 A1 | |
| | | |
| Y | JP 2003-283790 A (Fuji Xerox Co., Ltd.), | 4-13,26-35, |
|   | 03 October, 2003 (03.10.03), | 48-55 |
|   | Par Nos. [0147] to [0148]; Fig. 14 | |
|   | & US 2003/0179412 A1 | |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 December, 2004 (10.12.04) | 11 January, 2005 (11.01.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

| International application No. |
| --- |
| PCT/JP2004/016300 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2003-280469 A (Fuji Xerox Co., Ltd.),<br>03 October, 2003 (03.10.03),<br>Par Nos. [0175] to [0176]; Fig. 15<br>& US 2003/0179399 A1 | 4-13,26-35,<br>48-55 |
| A | JP 2001-346032 A (Fuji Xerox Co., Ltd.),<br>14 December, 2001 (14.12.01),<br>Fig. 2<br>(Family: none) | 1-55 |
| A | JP 2002-204350 A (Canon Inc.),<br>19 July, 2002 (19.07.02),<br>Fig. 17<br>& US 2002/0085238 A1 | 1-55 |
| A | JP 2001-103286 A (Canon Inc.),<br>13 April, 2001 (13.04.01),<br>Figs. 5 to 10<br>(Family: none) | 1-55 |
| A | JP 10-304179 A (Canon Inc.),<br>13 November, 1998 (13.11.98),<br>Figs. 6 to 11<br>& JP 10-243222 A     & US 6384935 B1 | 1-55 |

Form PCT/ISA/210 (continuation of second sheet) (January 2004)